# EUROPEAN PATENT APPLICATION

(11) **EP 1 739 136 A1**
(43) Date of publication of application: **03.01.2007**
(21) Application number: 06012710.7
(22) Date of filing: 21.06.2006
(51) Int. Cl.: C09C 1/30, B41M 5/52, C09C 1/40

(54) **Composite fine particles and ink jet recording material containing these particles.**

(30) Priority: 29.06.2005 JP 2005190119; 19.05.2006 JP 2006140266
(71) Applicant: OJI PAPER CO., LTD., Tokyo (JP)
(72) Inventor: Suzuki, Shigeru c/o Oji Paper Co., Ltd, Koto-ku, Tokyo (JP); Ishida, Tatsuji c/o Oji Paper Co., Ltd, Koto-ku, Tokyo (JP)
(74) Representative: Berkenbrink, Kai-Oliver

(57) **Abstract**

Highly versatile composite fine particles that can coexist with a wide variety of other components, a dispersion thereof, and a method of producing such a dispersion. Furthermore, by using these composite fine particles, there are also provided a high-quality ink jet recording material and a method of producing this ink jet recording material. Composite fine particles, which include cationic fine particles that exhibit a positive zeta potential when dispersed within water to form a dispersion and an anionic compound that is supported on the surface of the cationic fine particles, wherein the composite fine particles exhibit a negative zeta potential when dispersed within water to form a dispersion, are added to the coating layer of an ink jet recording material.

## Description

### TECHNICAL FIELD

The present invention relates to composite fine particles of a cationic pigment and an anionic compound, a dispersion that includes these composite fine particles, a method of producing this dispersion, an ink jet recording material, and a method of producing the ink jet recording material.

This application claims priority on Japanese Patent Application No. 2005-190119 filed on June 29, 2005 and Japanese Patent Application No. 2006-140266 filed on May 19, 2006, the disclosure of which is incorporated by reference herein.

### BACKGROUND ART

Ink jet recording systems, in which the ink is jetted out through fine nozzles and forms an image on a recording material, produce little noise on printing, can be easily adapted to color printing, are capable of high-speed recording, and are also considerably cheaper than other printing systems, and are consequently widely used in terminal printers, facsimiles, plotters, and in the printing of forms and the like.

Ink jet recording materials for use within ink jet recording systems are predominantly designed for printing with dye-based inks. These dye-based inks suffer from relatively poor weather resistance and color-fastness, with the dye undergoing discoloration upon irradiation with ultraviolet light or upon contact with oxygen or ozone, and consequently the printed product suffers from discoloration or fading over time. These problems are particularly marked when the printed product is used outdoors.

As a result, pigment-based inks, which offer excellent weather resistance, are now starting to be used within ink jet recording systems. However, pigment particles typically have a particle size of 10 to 500 nm, and if a recorded region is touched following printing, the pigment particles tend to be prone to dislodging, leading to color fading. In other words, pigment-based inks suffer from poor abrasion resistance.

In order to overcome these abrasion resistance problems associated with the use of pigment-based inks, the use of cationic fine particles, in which a cationic compound is supported on the surface of oxide particles, within the ink receiving layer of an ink jet recording material has been proposed (see patent reference 1).

### [Patent Reference 1]

Japanese Unexamined Patent Application, First Publication No. 2000-037946

### DISCLOSURE OF INVENTION

### PROBLEMS TO BE SOLVED BY THE INVENTION

However, cationic fine particles such as those disclosed in the patent reference 1 have proven difficult to use with anionic compounds, and tend to undergo aggregation if an anionic compound is added to the cationic fine particles dispersion. As a result, if a coating liquid containing these cationic fine particles is used to form the gloss layer of an ink jet recording material, then only cationic release agents can be selected as the release agent. In this manner, cationic fine particles such as those disclosed in the patent reference 1 are restricted in terms of the components with which they can be combined.

The present invention takes the above circumstances into consideration, with an object of providing highly versatile composite fine particles that can coexist with a wide variety of other components, and a dispersion thereof, as well as a method of producing such a dispersion. Furthermore, by using these composite fine particles, the present invention also has an object of providing a high-quality ink jet recording material and a method of producing this ink jet recording material.

### MEANS FOR SOLVING THE PROBLEMS

In order to achieve the above objects, the present invention employs the aspects described below.
[1] Composite fine particles, which contain cationic fine particles that exhibit a positive zeta potential when dispersed within water to form a dispersion and an anionic compound that is supported on the surface of the cationic fine particles, wherein the composite fine particles exhibit a negative zeta potential when dispersed within water to form a dispersion.
[2] Composite fine particles according to [1], wherein the anionic compound is a carboxylic acid-based compound.
[3] Composite fine particles according to either [1] or [2], wherein the cationic fine particles are a cationic silica in which a cationic compound is supported on the surface of fine particles of silica.
[4] A dispersion produced by dispersing the composite fine particles according to any one of [1] through [3] in a water-based dispersion medium.
[5] A dispersion according to [4], wherein the zeta potential of the composite fine particles is within a range from -10 to -150 mV.
[6] A method of producing a dispersion according to either [4] or [5] that includes
   an aggregation step of mixing cationic fine particles and an anionic compound together within a water-based dispersion medium to form an aggregate, and
   a pulverization step of pulverizing the aggregate within the dispersion medium using a mechanical device.
[7] An ink jet recording material that includes a coating layer containing the composite fine particles according to any one of [1] through [3].
[8] An ink jet recording material according to [7], wherein the coating layer containing the composite fine particles is formed using a coating liquid that contains a dispersion produced by dispersing the composite fine particles in water.
[9] An ink jet recording material according to either [7] or [8], wherein the coating layer containing the composite fine particles is provided as the outermost surface layer.
[10] An ink jet recording material according to [9], wherein the coating layer containing the composite fine particles also contains an anionic release agent.
[11] An ink j et recording material according to any one of [7] through [10], wherein the coating layer containing the composite fine particles is provided on top of an ink receiving layer of a substrate that is produced by providing the ink receiving layer on top of an air-impermeable or low air permeability support.
[12] A method of producing an ink jet recording material that includes the steps of
   supplying a coating liquid containing the composite fine particles according to any one of [1] through [3] and an anionic release agent onto an ink receiving layer of a substrate that is produced by providing the ink receiving layer on top of a support,
   forming a gloss layer by press coating, by passing the substrate between a gloss roll and a press roll so that the coating liquid contacts the gloss roll, and
   separating the gloss layer from the gloss roll while the gloss layer is either still wet or in a semi-dried state.

### EFFECTS OF THE INVENTION

The composite fine particles according to [1] through [3] exhibit a high level of abrasion resistance typical of pigment-based inks containing cationic fine particles, but can also coexist with anionic compounds, meaning they offer excellent versatility.

The dispersion according to [4] and [5] exhibits a high level of abrasion resistance typical of pigment-based inks containing cationic fine particles, but also exhibits the properties of an anionic fine particles dispersion, and consequently aggregation does not occur even upon addition of anionic compounds, meaning the dispersion offers excellent versatility.

The method of producing a dispersion according to [6] enables the production of a highly versatile dispersion.

The ink jet recording material according to [7] through [11] uses the highly versatile composite fine particles described above, meaning the composition of the coating layer can be freely adjusted. As a result, a coating layer with the desired properties can be obtained with relative ease, enabling the production of a high-quality product.

The method of producing an ink jet recording material according to [12] enables the production of a high-quality ink jet recording material.

### BRIEF DESCRIPTION OF THE DRAWINGS

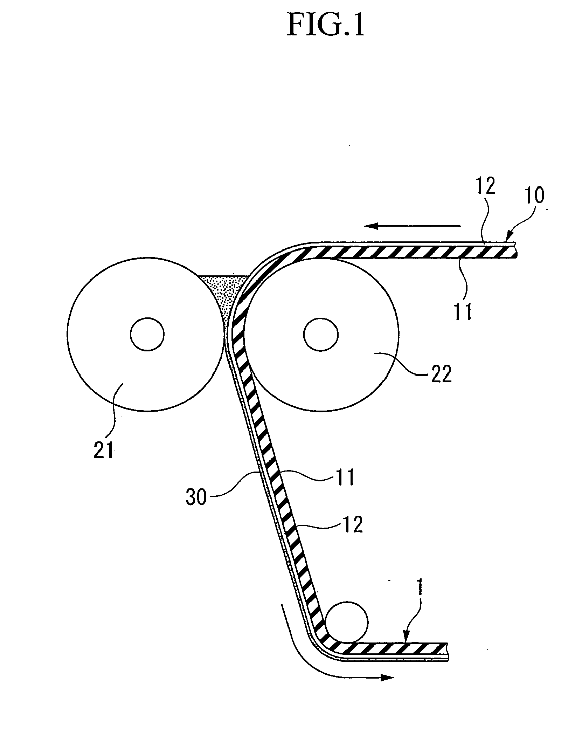

FIG. 1 is a diagram showing a schematic illustration of one embodiment of a method of producing an ink jet recording material according to the present invention.

### BEST MODE FOR CARRYING OUT THE INVENTION

### [Composite Fine Particles]

Composite fine particles of the present invention are composite fine particles in which an anionic compound is supported on the surface of cationic fine particles. The zeta potential of these composite fine particles when dispersed within water to form a dispersion is negative.

### (Cationic Fine Particles)

The cationic fine particles of the composite fine particles of the present invention exhibit a positive zeta potential when dispersed within water to form a dispersion.

Examples of favorable cationic fine particles that can be used include aluminum oxides, aluminum oxide hydrates, and cationic silica.

There are some drawbacks associated with the use of aluminum oxides and aluminum oxide hydrates such as the odor of the acetic acid used as a deflocculant, and consequently cationic silica is particularly preferred.

### (Cationic Silica)

Cationic silica refers to cationic fine particles in which a cationic compound is supported on the surface of fine particles of silica. Fine particles of silica are inherently anionic, but can be converted to a cationic dispersion by subjecting the silica to a pulverization treatment using a mechanical device within a water-based dispersion medium in the presence of a cationic compound (see Japanese Unexamined Patent Application, First Publication No. 2004-050811).

The fine particles of silica are preferably a synthetic silica such as a gas phase silica or wet silica, and in the case of ink jet paper, a wet silica is particularly desirable as it yields superior gloss properties.

Examples of the cationic compound that is supported on the fine particles of silica include cationic polymers, water-soluble polyvalent metal compounds, and silane coupling agents. Of these cationic compounds, cationic polymers and water-soluble polyvalent metal compounds are particularly preferred.

Examples of cationic polymers that can be used in the present invention include polyalkylene polyamines such as polyethylene polyamines, polypropylene polyamines and derivatives thereof, acrylic resins containing secondary amino groups, tertiary amino groups and/or quaternary ammonium groups, polyvinylamines, polyvinylamidines, 5-membered ring amidines, dicyan-based cationic resins such as polycondensation products of dicyandiamide and formalin, polyamine-based cationic resins such as polycondensation products of dicyandiamide and diethylenetriamine, addition polymerization products of epichlorohydrin and dimethylamine, copolymers of dimethyldiallylammonium chloride and SO₂, copolymers of diallylamine and SO₂, polymers of dimethyldiallylammonium chloride, polymers of allylamine salts, polymers of dialkylaminoethyl (meth)acrylate quaternary ammonium salts, and copolymers of acrylamide and diallylamine salts.

Of these, cationic polymers are preferred in terms of dispersibility, and cationic resins that contain primary, secondary, or tertiary amine groups offer particularly favorable dispersibility and are consequently particularly desirable. Amidine compounds that include 5-membered rings are the most favorable.

There are no particular restrictions on the molecular weight of the cationic polymer, although values with a range from 10,000 to 100,000 are preferred in terms of dispersibility and dispersion stability. Molecular weights within a range from 20,000 to 70,000 are particularly desirable. If the molecular weight is too small then the dispersibility may be poor, whereas if the molecular weight is too large, the dispersion stability may deteriorate.

There are no particular restrictions on the weight ratio between the fine particles of silica and the cationic polymer, although ratios of 100 : 1 to 30 are preferred, and ratios of 100 : 2 to 15 are particularly desirable. If the quantity of the cationic polymer is too small, then either the cationicity of the overall dispersion system is overly weak, or the overall dispersion system may not become cationic at all. In other words, the zeta potential upon dispersion within ion-exchanged water to generate a dispersion is no higher than 10 mV. In such cases, even if dispersion is achieved, there is considerable danger of the particles re-aggregating within a short period.

On the other hand, if the quantity of the cationic polymer is too large, then when the dispersion is used for an ink jet recording material, there is a danger that cationic compound that is not supported on the pigment may exist within the dispersion as a free compound, that is, as an impurity.

Examples of water-soluble polyvalent metal compounds that can be used in the present invention include compounds of calcium, barium, manganese, copper, cobalt, nickel, aluminum, iron, zinc, zirconium, titanium, chromium, magnesium, tungsten, and molybdenum, and water-soluble salts of these metals can be used. The term "water-soluble" refers to a solubility within water at ambient temperature and pressure of at least 1 % by weight.

Specific examples of suitable polyvalent metal compounds include calcium acetate, calcium chloride, calcium formate, calcium sulfate, barium acetate, barium sulfate, barium phosphate, manganese chloride, manganese acetate, manganese formate dihydrate, manganese ammonium sulfate hexahydrate, cupric chloride, ammonium copper (II) chloride dihydrate, copper sulfate, cobalt chloride, cobalt thiocyanate, cobalt sulfate, nickel sulfate hexahydrate, nickel chloride hexahydrate, nickel acetate tetrahydrate, nickel ammonium sulfate hexahydrate, nickel amidosulfate tetrahydrate, aluminum sulfate, aluminum sulfite, aluminum thiosulfate, polyaluminum chloride, aluminum nitrate nonahydrate, aluminum chloride hexahydrate, polyaluminum acetate, polyaluminum lactate, ferrous bromide, ferrous chloride, ferric chloride, ferrous sulfate, ferric sulfate, zinc bromide, zinc chloride, zinc nitrate hexahydrate, zinc sulfate, zirconium acetate, zirconium nitrate, basic zirconium carbonate, zirconium hydroxide, zirconium ammonium carbonate, zirconium potassium carbonate, zirconium sulfate, zirconium fluoride, zirconium chloride, zirconium chloride octahydrate, zirconium oxychloride, zirconium hydroxychloride, titanium chloride, titanium sulfate, chromium acetate, chromium sulfate, magnesium sulfate, magnesium chloride hexahydrate, magnesium citrate nonahydrate, sodium phosphotungstate, sodium tungsten citrate, 12-tungstophosphoric acid n-hydrate, 12-tungstosilicic acid 26-hydrate, molybdenum chloride, and 12-molybdophosphoric acid n-hydrate.

Of these, a polyaluminum salt such as polyaluminum chloride, polyaluminum acetate or polyaluminum lactate is preferred.

Specific examples of suitable materials include Takibine #1500 and PAC250A manufactured by Taki Chemical Co., Ltd., polyaluminum hydroxide (Paho) manufactured by Asada Kagaku Co., Ltd., and Purachem WT manufactured by Rikengreen Co., Ltd. These basic polyaluminum hydroxide compounds are also disclosed in Japanese Examined Patent Applications, Second Publication Nos. Hei 3-24907 and Hei 3-42591, and in Japanese Unexamined Patent Applications, First Publication Nos. 2000-37946, 2002-86893 and 2003-276315.

The quantity added of the above water-soluble polyvalent metal salt compound is preferably within a range from 0.1 to 10% by weight relative to the inorganic fine particles.

There are no particular restrictions on the weight ratio between the fine particles of silica and the water-soluble polyvalent metal salt compound, although ratios of 100 : 0.1 to 15 are preferred. If the quantity of the water-soluble polyvalent metal salt compound is too small, then either the cationicity of the overall dispersion system is overly weak, or the overall dispersion system may not become cationic at all. In other words, the zeta potential upon dispersion within ion-exchanged water to generate a dispersion is no higher than 10 mV. In such cases, even if dispersion is achieved, there is considerable danger of the particles re-aggregating within a short period.

On the other hand, if the quantity of the cationic compound is too large, then when the dispersion is used for an ink jet recording material, there is a danger that water-soluble polyvalent metal salt compound that is not supported on the pigment may exist within the dispersion as a free compound, that is, as an impurity.

Examples of silane coupling agents that can be used in the present invention include the cationic silane coupling agents amongst those coupling agents disclosed in Japanese Unexamined Patent Application, First Publication No. 2000-233572. The quantity added of the silane coupling agent is preferably within a range from 0.1 to 10% by weight relative to the inorganic fine particles.

When the fine particles of silica are subjected to pulverization treatment using a mechanical device in the presence of a cationic compound, a water-based dispersion medium is used as the dispersion medium. In this description, the term "water-based dispersion medium" refers to either water or a dispersion medium that contains water as the primary component. The water-based dispersion medium may include small quantities or organic solvents (including lower alcohols such as ethanol or low boiling point solvents such as ethyl acetate). In such cases, the quantity of the organic solvent is preferably no more than 20% by weight of the overall dispersion medium, and is even more preferably 10% by weight or less.

Examples of the mechanical devices that can be used for conducting the pulverization treatment of the fine particles of silica in the presence of a cationic compound include a beads mill, ultrasonic homogenizer, pressure homogenizer, liquid-liquid collision homogenizer, nanomizer, ultimizer, high-speed tumbling mill, roller mill, container-driven medium mill, medium stirring mill, jet mill, or sand grinder.

Of these, the use of a beads mill, ultrasonic homogenizer, pressure homogenizer, liquid-liquid collision homogenizer, nanomizer, or ultimizer is preferred. The use of a liquid-liquid collision homogenizer, nanomizer or ultimizer is particularly desirable in terms of suppressing the level of impurity incorporation to a minimum.

### (Aluminum Oxides)

Approximately eight different transformations of aluminum oxides (alumina) are known. Namely, it is already known that by heating an aluminum hydroxide such as gibbsite, bayerite or boehmite, transition to α-alumina and subsequent particle growth occurs via various intermediate alumina materials, including χ → κ → α, γ → δ → θ → α, η → θ → α, ρ → η → θ → α, or pseudo-γ → 0 → α (for example, see Electrochemistry, vol. 28, p. 302, Funaki and Shimizu, "Alumina Hydrate and Alumina", "Examples of thermal changes of alumina hydrates").

Furthermore, it is also known that when an aluminum salt such as aluminum chloride, aluminum sulfate, or aluminum nitrate undergoes thermal decomposition, transition occurs from amorphous alumina to α-alumina via an γ-, δ-, or θ- intermediate alumina (for example, see Journal of the Mineralogical Society of Japan, vol. 19, No. 1, p. 21 and p. 41). The alumina used as a dispersion material is an aluminum oxide that contains either one, or a plurality of crystals selected from amongst γ-, η-, δ-, ρ-, χ-, θ-, κ-, and α-alumina.

In the present invention, in terms of achieving a favorable balance between transparency, gloss, and ink absorption properties for the ink jet paper, the alumina preferably includes at least α-, δ-, θ-, or γ- crystals.

The aluminum oxide can be converted to a dispersion by conducting a pulverization treatment using a mechanical device within a water-based dispersion medium. This mechanical device can employ the same types of devices as those used for conducting the aforementioned pulverization treatment of the fine particles of silica in the presence of a cationic compound.

An acid such as acetic acid, nitric acid, lactic acid, or hydrochloric acid is preferably added to the dispersion medium. This addition enables dispersion to be achieved more efficiently. Conducting the dispersion in the presence of an acid and in contact with a cation exchange resin, as disclosed in Japanese Unexamined Patent Application, First Publication No. Hei 7-89717 is particularly desirable.

### (Aluminum Oxide Hydrates)

Examples of suitable aluminum oxide hydrates (alumina hydrates) include the various crystalline alumina hydrates such as gibbsite, boehmite, pseudoboehmite, bayerite, and diaspore, although in the present invention, in terms of achieving a favorable balance between transparency, gloss, and ink absorption properties for the ink jet paper, gibbsite, boehmite, or pseudoboehmite is preferred.

The aluminum oxide hydrate can be converted to a dispersion by conducting dispersion, pulverization, and then deflocculation treatments.

Examples of the anionic compound that constitutes the composite fine particles of the present invention include carboxylic acid-based compounds, sulfonic acid-based compounds, phosphoric acid-based compounds, ester-based compounds, and salts thereof.

Of these, the use of carboxylic acid-based compounds is preferred, and the use of polymers or salts of polymers is particularly desirable.

The anionic compound of the composite fine particles of the present invention may be either a single compound or a mixture of two or more different compounds.

The carboxylic acid-based compound is preferably a fatty acid or dimer acid of at least 6, but no more than 30, carbon atoms, or a metal salt thereof such as a sodium salt or potassium salt, or an ammonium salt or amine salt thereof.

Specific examples of suitable compounds include aliphatic saturated dicarboxylic acids such as oxalic acid, malonic acid, succinic acid, glutaric acid, adipic acid, pimelic acid, suberic acid, azelaic acid, sebacic acid, malic acid, tartaric acid, and cyclopropanedicarboxylic acid, aliphatic unsaturated dicarboxylic acids such as maleic acid, fumaric acid, citraconic acid, and itaconic acid, aromatic dicarboxylic acids such as phthalic acid, isophthalic acid, terephthalic acid, carboxyphenylacetic acid, carboxyphenylpropionic acid, and phenylenediacetic acid, and trihydric and higher polycarboxylic acids such as tricarballylic acid and trimellitic acid.

A specific example of commercially available itaconic acid or the salt thereof is the product Jurymer AC-70N manufactured by Nihon Junyaku Co., Ltd.

Examples of preferred carboxylic acid polymers or salts thereof include acrylic acid homopolymers, copolymers of acrylic acid and maleic acid, α-hydroxyacrylic acid homopolymers, copolymers of C5 olefins and maleic acid, copolymers of isobutylene and maleic acid, as well as the alkali metal salts, ammonium salts, or amine salts of these (co)polymers, and of these, acrylic acid homopolymers and copolymers of acrylic acid and maleic acid are particularly preferred.

Specific examples of commercially available products include Poiz 540, Poiz 530, Poiz 521 and Poiz 520, manufactured by Kao Corporation, Paleplac 250, Paleplac 1200, and Paleplac 5000, manufactured by Nippon Peroxide Co., Ltd., Quinflow 540, Quinflow 542, Quinflow 543, Quinflow 560, Quinflow 640, and Quinflow 750, manufactured by Zeon Corporation, Aron T-40(M) manufactured by Toagosei Co., Ltd., Isobam 06, Isobam 04, and Isobam 600, manufactured by Kuraray Co., Ltd., and Aqualic DL100 manufactured by Nippon Shokubai Co., Ltd.

Specific examples of suitable sulfonic acid-based compounds include diphenyl ether sulfonic acid, alkylbenzenesulfonic acids such as n-butylbenzenesulfonic acid, alkylsulfonic acids, n-amylbenzenesulfonic acid, n-octylbenzenesulfonic acid, n-dodecylbenzenesulfonic acid, n-octadecylbenzenesulfonic acid, n-dibutylbenzenesulfonic acid, alkylnaphthalenesulfonic acids such as iso-propylnaphthalenesulfonic acid, dodecylnaphthalenesulfonic acid, dinonylnaphthalenesulfonic acid and dinonylnaphthalenedisulfonic acid, and quinacridonesulfonic acids that can be synthesized by reacting unsubstituted quinacridone, dimethylquinacridone, or dichloroquinacridone or the like with concentrated sulfuric acid or the like using a conventional method. Furthermore, metal salts thereof such as sodium salts or potassium salts, or ammonium salts of the above compounds can also be used.

Examples of suitable sulfonic acid polymers or salts thereof include styrenesulfonic acid polymers, and alkali metal salts, ammonium salts, or amine salts thereof, and specific examples of commercially available products include Polity PS-1900 manufactured by Lion Corporation, and the polymers containing sulfonic acid groups disclosed in Japanese Unexamined Patent Application, First Publication No. 2000-226416.

Examples of suitable ester-based compounds include alkyl sulfates, polyoxyalkylene alkyl sulfates, polyoxyalkylene alkylphenyl ether sulfates, tristyrenated phenol sulfates, polyoxyalkylene distyrenated phenol sulfates, vinyl acetate, methyl acrylate, ethyl acrylate, propyl acrylate, butyl acrylate, hexyl acrylate, octyl acrylate, lauryl acrylate, benzyl acrylate, N,N-dimethylaminoethyl acrylate, methyl methacrylate, ethyl methacrylate, propyl methacrylate, butyl methacrylate, hexyl methacrylate, octyl methacrylate, lauryl methacrylate, N,N-dimethylaminoethyl methacrylate, methyl fumarate, ethyl fumarate, propyl fumarate, butyl fumarate, dimethyl fumarate, diethyl fumarate, dipropyl fumarate, dibutyl fumarate, methyl maleate, ethyl maleate, propyl maleate, butyl maleate, dimethyl maleate, diethyl maleate, dipropyl maleate, dibutyl maleate, alkyl phosphates, and polyoxyalkylene phosphates. Furthermore, metal salts such as sodium salts or potassium salts, or ammonium salts of these esters can also be used.

### (Weight Ratios and other factors)

The composite particles of the present invention exhibit a negative zeta potential when dispersed within water to form a dispersion. Although there are no particular restrictions on the weight ratio between the cationic fine particles and the anionic compound, ratios of 100 : 1 to 50 are preferred, and ratios of 100 : 2 to 30 are particularly desirable.

If the quantity of the anionic compound is too low, then either the anionicity of the overall dispersion system is overly weak, or the overall dispersion system may not become anionic at all. In other words, the zeta potential upon dispersion within ion-exchanged water to generate a dispersion is higher than -10 mV. In such cases, even if dispersion is achieved, there is considerable danger of the particles re-aggregating within a short period.

On the other hand, if the quantity of the anionic compound is too large, then when the dispersion is used for an ink jet recording material, there is a danger that anionic compound that is not supported on the pigment may exist within the dispersion as a free compound, that is, as an impurity.

The average particle size of the cationic fine particles (in the case of secondary particles, the secondary particle size) is preferably within a range from 10 to 800 nm, and even more preferably from 15 to 500 nm. Furthermore, the average particle size of the composite fine particles (in the case of secondary particles, the secondary particle size) is preferably within a range from 10 to 1,000 nm, and even more preferably from 15 to 800 nm.

The composite particles of the present invention are preferably used in the form of a dispersion, but the dispersion medium may also be removed and the particle then used in powdered form.

### [Dispersion]

A dispersion according to the present invention is a dispersion produced by dispersing composite fine particles of the present invention in a water-based dispersion medium. The zeta potential of the composite fine particles within the dispersion is preferably within a range from -10 to -150 mV, and even more preferably from -20 to - 120 mV.

Ensuring that the absolute value of the negative zeta potential is at least 10 mV facilitates coexistence with anionic compounds.

### [Method of Producing Dispersion]

A method of producing a dispersion according to the present invention includes an aggregation step of mixing the cationic fine particles and the anionic compound together within a water-based dispersion medium to form an aggregate, and
a pulverization step of pulverizing the aggregate within the dispersion medium using a mechanical device.

### (Aggregation Step)

In the aggregation step, the cationic fine particles and the anionic compound are mixed together within a water-based dispersion medium.

Specifically, either a dispersion of the cationic fine particles is added to the anionic compound, or the anionic compound is added to a dispersion of the cationic fine particles.

### (Pulverization Step)

In the pulverization step, the aggregate formed in the aggregation step is pulverized within the water-based medium using a mechanical device. This mechanical device can employ the same types of devices as those used for conducting the aforementioned pulverization treatment of the fine particles of silica in the presence of a cationic compound.

### [Ink jet Recording Material]

There are no particular restrictions on the configuration of an ink jet recording material according to the present invention, and suitable materials include those produced by forming either one, or a plurality of ink receiving layers on top of a support. Furthermore, a gloss layer may then be formed on top of the ink receiving layer or layers.

An ink jet recording material of the present invention includes a coating layer containing the composite fine particles of the present invention. This coating layer that contains the composite fine particles of the present invention may constitute either all or a portion of the ink receiving layer, or may constitute the gloss layer. Of these possibilities, materials in which the coating layer exists as the outermost surface layer (the recording surface) are preferred, and materials in which the coating layer exists as the gloss layer are particularly desirable.

The coating material for the coating layer containing the composite fine particles of the present invention exhibits a high level of abrasion resistance typical of pigment-based inks containing cationic fine particles, but can also coexist with anionic compounds. As a result, when application is conducted using a simultaneous multi-coating apparatus that includes a plurality of coating liquid supply ports, such as a multi-coating slot die coater, multi-coating slide bead coater, or multi-coating curtain die coater, the application process can be completed without any application anomalies caused by aggregation with coating materials for coating layers containing anionic fine particles, and this enables the coating layer to be designed in accordance with various requirements and then applied using any desired application method.

Of the various possibilities, using the above coating layer as the outermost surface layer enables the production of an ink jet recording material that exhibits superior abrasion resistance when pigment-based inks are used.

In addition, if the outermost surface layer is a gloss layer, then because an anionic release agent can be included within the layer, excellent releasability can be achieved during formation of the gloss layer, thereby facilitating the formation of a high-quality gloss layer.

In a preferred configuration for the case where the composite fine particles of the present invention are used in the gloss layer, the gloss layer is formed on a substrate that includes an ink receiving layer provided on top of a support. In this case, a layer containing a cross-linking agent can also be provided between the support and the ink receiving layer. As follows is a description of this preferred configuration.

### (Support)

The support preferably employs an air-impermeable or low air permeability support, as such supports enable gloss of a similar level to that of silver halide photographs to be achieved. If an air-impermeable or low air permeability support is used as the support, then penetration by solvents within the ink can be prevented, enabling cockling to be suppressed. As a result, the external appearance of the resulting printed matter improves, and problems such as staining or tearing of the recording paper or damage to the recording head, caused by contact between cockled recording material and the recording head, can be prevented.

In contrast, if an air-permeable support such as a paper substrate is used, then during printing, the solvents such as water contained within the ink can cause elongation of the substrate which may lead to rippling and cockling, although in the present invention, the support may also use an air-permeable support.

A low air permeability support or air-impermeable support refers to a support for which the air permeability is at least 500 seconds, and preferably 1,000 seconds or longer. The level of air permeability is generally represented in terms of the air permeability property that is used for evaluating the porosity for paper and nonwoven fabrics and the like. This air permeability represents the time required for 100 ml of air to pass through a test specimen with a surface area of 645 mm², and is prescribed in JIS P 8117 (method of testing air permeability of paper and cardboard).

Specific examples of suitable low air permeability supports or air-impermeable supports include films such as cellophane, polyethylene, polypropylene, soft polyvinyl chloride, hard polyvinyl chloride, and polyester. Furthermore, other examples include resin-coated papers produced by coating the surface of a substrate such as paper with a polyolefin such as polyethylene or polypropylene, metal foils, and sheets of synthetic papers or the like produced by stretching polypropylene and conducting special processing. The support is selected appropriately from the above supports in accordance with factors such as the method used for forming the ink receiving layer and gloss layer on top of the support, and the intended application of the product recording material.

Of the above supports, a synthetic paper or a resin-coated paper is preferred for the production of a photograph-quality ink jet recording material, and in particular, a support formed from a resin-coated paper containing titanium oxide, namely RC paper, yields an external appearance similar to that of a photographic printing paper, and is consequently particularly desirable.

Amongst synthetic papers, those produced by extruding and biaxially stretching a polypropylene resin that contains an inorganic pigment such as calcium carbonate are preferred, and a synthetic paper that also includes a smooth skin layer with no irregularities on the surface is particularly desirable.

In those cases where the support is a resin-coated paper produced by coating a substrate with a polyethylene layer, the coating quantity of the polyethylene layer is preferably within a range from 3 to 50 g/m², and even more preferably from 5 to 30 g/m². If the coating quantity of the polyethylene layer is less than 3 g/m², then defects such as holes within the polyethylene become more likely during the resin coating process, control of the thickness of the layer often becomes difficult, and obtaining a favorable smoothness can also be problematic. In contrast if the coating quantity exceeds 50 g/m², then the additional advantages obtained are minimal considering the increase in cost, meaning the coating becomes uneconomic.

Furthermore, in order to improve adhesion with the ink receiving layer, the resin layer surface is preferably subjected to corona discharge treatment and/or provided with an anchor coat layer.

Furthermore, if a paper is used as the substrate for the resin-coated paper, then a paper produced using wood pulp as the primary material is preferred. This wood pulp can use any of the various chemical pulps, mechanical pulps or recycled pulps, and in order to regulate certain properties such as the paper strength, the smoothness, and the suitability of the pulp for paper making, the beating degree of the pulp can be adjusted using a beater. There are no particular restrictions on the beating degree, although typically a freeness value within a range from 250 to 550 ml (CSF: JIS-P-8121) is preferred. So-called chlorine-free pulps such as ECF and TCF pulps can also be employed favorably. Furthermore, if required, pigments can also be added to the wood pulp. Examples of pigments that can be used favorably include talc, calcium carbonate, clay, kaolin, baked kaolin, silica, and zeolite. Addition of a pigment enables the opaqueness and smoothness of the material to be enhanced, but excessive addition can result in a deterioration in the paper strength, and consequently the quantity of pigment added is preferably kept within a range from 1 to 20% by weight of the wood pulp.

The coloring of the support may also be adjusted by using fluorescent brighteners such as fluorescent dyes or fluorescent pigments, and the support may also be provided with an antistatic layer. The support may be either transparent or opaque.

### (Ink Receiving Layer)

The ink receiving layer is the layer formed on top of the support, and is primarily responsible for fixing the colorant such as the dye or pigment within the ink, and absorbing the solvent within the ink.

The ink receiving layer may be either a single layer or a plurality of layers. At least one layer of the ink receiving layer preferably includes fine particles of a pigment or the like and an adhesive.

Examples of these fine particles include both transparent and white fine particles such as colloidal silica, amorphous silica, titanium oxide, barium sulfate, kaolin, clay, baked clay, zinc oxide, aluminum hydroxide, calcium carbonate, satin white, aluminum silicate, alumina, zeolites (including natural zeolites and synthetic zeolites), sepiolite, smectites, synthetic smectites, magnesium silicate, magnesium carbonate, magnesium oxide, diatomaceous earth, styrene-based plastic pigments, hydrotalcites, urea resin-based plastic pigments, and benzoguanamine-based plastic pigments. The ink receiving layer may include either one, or a combination of two or more of these fine particles.

Examples of suitable adhesives include polyvinyl alcohols such as polyvinyl alcohol (PVA) and modified PVAs such as cation-modified PVA and silyl-modified PVA, other water-soluble resins such as polyvinyl acetal, polyethyleneimine, polyvinylpyrrolidone, and polyacrylamide, as well as casein, soybean protein, synthetic proteins, starch, cellulose derivatives such as carboxymethylcellulose and methylcellulose, or any of the known adhesives conventionally used within coated papers, such as (meth)acrylate (co)polymers, styrene resins, styrene-(meth)acrylate copolymers, methyl methacrylate-butadiene copolymers, styrene-butadiene copolymers, polyether-based urethane resins, polyester-based polyurethane resins, polycarbonate-based polyurethane resins, epoxy-based resins, ethylene-vinyl acetate copolymers, ethylene-(meth)acrylic acid copolymers, melamine-based resins, urea-based resins, and olefin-based resins. Furthermore, temperature-sensitive polymer compounds that exhibit hydrophilic properties at temperatures no higher than a critical temperature, but exhibit hydrophobic properties at temperatures higher than the critical temperature can also be used. The adhesives above may also be used in appropriate combinations.

Moreover, the ink receiving layer preferably also contains a cationic compound. Examples of suitable cationic compounds include conventional cationic compounds, including (1) polyalkylene polyamines such as polyethylene polyamines and polypropylene polyamines, and derivatives thereof, (2) acrylic polymers containing secondary amino groups, tertiary amino groups, and/or quaternary ammonium groups, (3) polyvinylamines and polyvinylamidines, (4) dicyan-based cationic compounds such as copolymers of dicyandiamide and formalin, (5) polyamine-based cationic compounds such as copolymers of dicyandiamide and polyethyleneamine, (6) copolymers of epichlorohydrin and dimethylamine, (7) copolymers of dimethylallylammonium chloride and SO₂, (8) copolymers of diallylamine and SO₂, (9) polymers of diallyldimethylammonium chloride, (10) copolymers of diallyldimethylammonium chloride and acrylamide, (11) copolymers of allylamine salts, (12) copolymers of dialkylaminoethyl (meth)acrylate quaternary salts, (13) copolymers of acrylamide and diallylamine, and (14) cationic resins with 5-membered ring amidine structures. Of these, quaternary ammonium hydrochlorides of polyvinylamine copolymers with 5-membered ring amidine structures, partial or full hydrochlorides of polyallylamines, and partial or full hydrochlorides of polyallylamines in which a portion of the amino groups have undergone methoxycarbonyl modification yield superior levels of ink absorption and gloss, and excellent image sharpness, and are consequently preferred.

Furthermore, in those cases where the ink receiving layer adhesive is a PVA, a suitable cross-linking agent may also be added to the ink receiving layer. This enables the coating quantity of the ink receiving layer to be increased.

Examples of suitable PVA cross-linking agents include polyvalent metal compounds such as boron compounds, zirconium compounds, aluminum compounds and chromium compounds, as well as epoxy compounds, glycidyl compounds, dihydrazide compounds, aldehyde compounds, amine compounds, and methylol compounds. Of these cross-linking agents, boron compounds are preferred as the thickening or gelling process proceeds more rapidly, and boric acid and/or borax are particularly desirable.

Examples of the boric acid include orthoboric acid, metaboric acid, diboric acid, tetraboric acid and pentaboric acid. Of these boric acids, orthoboric acid and disodium tetraborate are preferred. Borax is a sodium hydrated borate mineral with a composition represented by Na₂B₄O₇·10H₂O. In essence, Na₂B₄O₇ (disodium tetraborate) functions as the cross-linking component.

Furthermore, any of the variety of additives typically used in the production of coated papers may also be added to the ink receiving layer as required, including various pigments, storage stability improvers such as dispersants, thickeners, ultraviolet light absorbers and antioxidants, and other assistants such as surfactants, antifoaming agents, colorants, fluorescent brighteners, antistatic agents, and preservatives.

### (Cross-Linking Agent-Containing Layer)

In those cases where the ink receiving layer adhesive is a PVA, a cross-linking agent-containing layer that contains a cross-linking agent, a thickener and a surfactant can be provided between the support and the ink receiving layer. This enables the coating quantity of the ink receiving layer to be increased.

As described above in relation to the case where a cross-linking agent is added to the ink receiving layer, suitable cross-linking agents for PVAs include polyvalent metal compounds such as boron compounds, zirconium compounds, aluminum compounds and chromium compounds, as well as epoxy compounds, glycidyl compounds, dihydrazide compounds, aldehyde compounds, amine compounds, and methylol compounds. Of these cross-linking agents, boron compounds are preferred as the thickening or gelling process proceeds more rapidly, and boric acid and/or borax are particularly desirable.

Examples of the boric acid include orthoboric acid, metaboric acid, diboric acid, tetraboric acid and pentaboric acid. Of these boric acids, orthoboric acid and disodium tetraborate are preferred.

There are no particular restrictions on the thickener, which may be any material that causes an increase in viscosity on addition to the coating liquid for the cross-linking agent-containing layer, and suitable examples include gelatin, biogums, cellulose derivatives, guar gums, sodium alginate, and polyacrylic acid.

Examples of suitable biogums include xanthan gum, welan gum and gellan gum. Examples of suitable cellulose derivatives include cationized cellulose, carboxymethylcellulose, hydroxyethylcellulose, hydroxypropyl methylcellulose, hydroxypropylcellulose and ethylcellulose. Examples of suitable guar gums include guar gum, hydroxypropylated guar gum and cationized guar gum.

Cellulose derivatives offer excellent balance between a comparatively high thickening effect and comparatively low gelation strength, and are consequently preferred. The polymerization degree of these cellulose derivatives is preferably within a range from 500 to 2,000, and even more preferably from 800 to 1,800, as such values enable comparatively simple regulation of the viscosity of the coating liquid for the cross-linking agent-containing layer.

Use of a thickener enables the viscosity of the coating liquid for the cross-linking agent-containing layer to be set within a predetermined range. This predetermined range for the viscosity of the coating liquid for the cross-linking agent-containing layer is preferably from 4 to 500 mPa·s.

Although there are no particular restrictions on the quantity of thickener used in the cross-linking-containing layer, if the predetermined viscosity is reached with the addition of only a small quantity of thickener, then adjustment of the viscosity becomes unfavorably difficult. On the other hand, overly large addition quantities of thickener are also undesirable as they may inhibit the effects of the cross-linking agent. Accordingly, the quantity of the thickener is preferably within a range from 1 to 100% by weight relative to the cross-linking agent. In other words, the use of a thickener that enables a predetermined viscosity to be achieved with the addition of a quantity within a range from 1 to 100% by weight is preferred.

By including a surfactant, repulsion of the coating liquid for the cross-linking agent-containing layer upon application to the support surface can be suppressed, enabling a cross-linking agent-containing layer with a more uniform coated surface to be obtained. Examples of suitable surfactants include anionic surfactants, cationic surfactants and nonionic surfactants.

Examples of anionic surfactants include sulfate ester-based surfactants, sulfonate-based surfactants, and phosphate ester-based surfactants. Examples of cationic surfactants include amine salt-based surfactants and quaternary ammonium salt-based surfactants. Examples of nonionic surfactants include acetylene glycol-based surfactants, polyethylene glycol-based surfactants and polyhydric alcohol-based surfactants. Of these, acetylene glycol-based surfactants combine excellent surfactant action with antifoaming properties, and are consequently preferred.

The quantity of the surfactant within the cross-linking agent-containing layer is preferably within a range from 0.001 to 10% by weight relative to the cross-linking agent. If the quantity of the surfactant is less than 0.001 % by weight or exceeds 10% by weight, then undesirable repulsion of the coating liquid can occur on application to the support surface.

Any of the variety of conventional adhesives typically used in the field of coated papers may also be added to the cross-linking agent-containing layer, provided such addition does not impair the effects of the cross-linking agent, and suitable adhesives include water-soluble resins such as polyvinyl acetal, polyethyleneimine, polyvinylpyrrolidone and polyacrylamide, as well as casein, soybean protein, synthetic proteins, starch, cellulose derivatives such as carboxymethylcellulose and methylcellulose, or (meth)acrylate (co)polymers, styrene resins, styrene-(meth)acrylate (co)polymers, methyl methacrylate-butadiene copolymers, styrene-butadiene copolymers, polyether-based urethane resins, polyester-based polyurethane resins, polycarbonate-based polyurethane resins, epoxy resins, ethylene-vinyl acetate copolymers, ethylene-(meth)acrylic acid (co)polymers, melamine-based resins, urea-based resins, and olefin-based resins. Furthermore, any of the variety of additives typically used in the production of coated papers may also be added as required, including various pigments, storage stability improvers such as dispersants, ultraviolet light absorbers and antioxidants, and other assistants such as antifoaming agents, colorants, fluorescent brighteners, antistatic agents, and preservatives.

### (Gloss Layer)

The gloss layer contains the composite fine particles of the present invention and an anionic release agent. The quantity of the anionic release agent is preferably within a range from 1 to 15 parts by weight per 100 parts by weight of the fine particles. Ensuring a quantity within this range facilitates release from the gloss roll during the gloss layer formation.

Other anionic fine particles may also be included, provided such inclusion does not impair the effects of the present invention. Examples of these other fine particles include both transparent and white pigments such as colloidal silica, silica produced by a gas phase method, kaolin, and baked kaolin. Of these, colloidal silica and gas phase silica yield superior gloss levels and are consequently preferred.

Examples of the anionic release agent include fatty acids such as stearic acid, oleic acid, and palmitic acid, as well as the alkali metal salts, ammonium salts, and amine salts of these fatty acids.

Of these, the use of a compound represented by a formula (1) shown below is preferred.

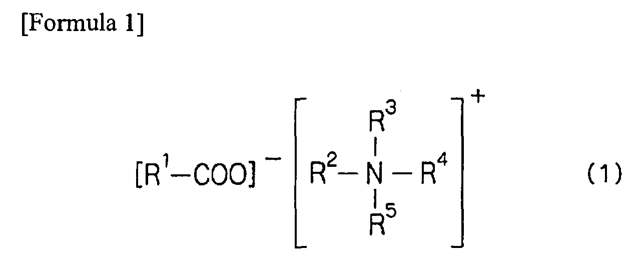

In the formula (1), R¹ represents an alkyl group or alkenyl group of 8 to 28 carbon atoms, and suitable examples include an oleyl group, stearyl group, lauryl group, palmityl group, or myristyl group. Of these, an oleyl group or stearyl group is preferred as the resulting compound exhibits favorable retention of the release properties over extended periods.

R² through R⁵ each represent either H or an alkyl group of 1 to 4 carbon atoms (namely, a methyl group, ethyl group, propyl group, or butyl group), and of these, H is preferred. Furthermore, the groups R² through R⁵ may either be the same or different, although compounds in which R² through R⁴ are the same are preferred.

The release agents represented by the above formula (1) are superior release agents that exhibit particularly favorable release properties, and do not inhibit the ink absorption properties.

Specific examples of the compounds of the formula (1) include ammonium oleate, ammonium stearate, ammonium laurate, ammonium palmitate, ammonium myristate, tetramethylammonium oleate, tetramethylammonium stearate, tetramethylammonium laurate, tetramethylammonium palmitate, tetramethylammonium myristate, tetraethylammonium oleate, tetraethylammonium stearate, tetraethylammonium laurate, tetraethylammonium palmitate, tetraethylammonium myristate, tetra-n-butylammonium oleate, tetra-n-butylammonium stearate, tetra-n-butylammonium laurate, tetra-n-butylammonium palmitate, and tetra-n-butylammonium myristate.

Of these, ammonium oleate offers particularly superior release properties and is consequently preferred.

Any of the variety of conventional additive typically used in the field of coated papers may also be added to the gloss layer, provided such addition does not impair the ink absorption properties, and suitable adhesives include polyvinyl alcohols (PVA) such as PVA, and modified PVAs such as cation-modified PVA and silyl-modified PVA, water-soluble resins such as polyvinyl acetal, polyethyleneimine, polyvinylpyrrolidone and polyacrylamide, as well as casein, soybean protein, synthetic proteins, starch, cellulose derivatives such as carboxymethylcellulose, hydroxyethylcellulose, hydroxypropyl methylcellulose, hydroxypropylcellulose and ethylcellulose, guar gums, (meth)acrylate (co)polymers, styrene resins, styrene-(meth)acrylate (co)polymers, methyl methacrylate-butadiene copolymers, styrene-butadiene copolymers; polyether-based urethane resins, polyester-based polyurethane resins, polycarbonate-based polyurethane resins, epoxy resins, ethylene-vinyl acetate copolymers, ethylene-(meth)acrylic acid (co)polymers, melamine-based resins, urea-based resins, and olefin-based resins.

Of these additives, casein, soybean protein, synthetic proteins, cellulose derivatives, and ethylene-vinyl acetate copolymers provide excellent releasability from mirror-surface rolls, and are consequently preferred. Furthermore, any of a variety of additives may also be added as required, including storage stability improvers such as ultraviolet light absorbers and antioxidants, and other assistants such as surfactants, antifoaming agents, antistatic agents, preservatives, colorants, fluorescent brighteners, dispersants and thickeners.

### [Method of Producing Ink Jet Recording Material]

A method of producing an ink jet recording material in which a gloss layer containing composite fine particles according to the present invention is formed on top of a substrate formed by providing an ink receiving layer on top of a support is described below with reference to FIG. 1.

In this method of producing an ink jet recording material of the above configuration, a substrate 10 is first prepared by providing an ink receiving layer 12 on top of a support 11.

### (Preparation of Substrate)

In order to prepare a substrate 10 that includes the ink receiving layer 12 provided on top of the support 11, a coating liquid containing the components of the aforementioned ink receiving layer dispersed within a solvent is applied to the surface of the support, and subsequently dried. There are no particular restrictions on the solvent for the coating liquid used in forming the ink receiving layer 12, although for reasons such as coating suitability, water is preferred.

The total coating quantity of the ink receiving layer 12 is preferably within a range from 5 to 70 g/m², even more preferably from 10 to 50 g/m², and most preferably from 15 to 40 g/m². Furthermore, the total thickness of the applied layer is preferably within a range from 7 to 105 µm, even more preferably from 15 to 75 µm, and most preferably from 22 to 60 µm. If the coating quantity is less than 5 g/m², then not only is there a possibility that the gloss layer may not be able to be formed satisfactorily, but the ink absorption properties may deteriorate, and the suitability of the product material for printing may also deteriorate. In contrast, if the coating quantity exceeds 70 g/m², then there is a danger that the strength of the coating layer may deteriorate, increasing the likelihood of trouble during cutting of the recording paper or feeding of the recording material through a printer.

The coating step may be conducted either once or across a plurality of repetitions. By repeating the coating step, a multilayer ink receiving layer can be formed. Applying the coating liquid across a plurality of coating repetitions enables the occurrence of cracking to be suppressed, while enabling a larger quantity of the coating liquid to be applied, thereby increasing the ink absorption volume of the ink receiving layer.

In those cases where the adhesive of the ink receiving layer 12 is a PVA, the addition of a cross-linking agent to the ink receiving layer 12 enables the occurrence of cracking to be suppressed, while enabling a larger coating quantity for the ink receiving layer 12, thereby increasing the ink absorption volume of the ink receiving layer 12.

In such cases, if the cross-linking agent is mixed into the coating liquid for the ink receiving layer 12 in advance, then reaction between the PVA and the cross-linking agent can lead to an increase in the viscosity of the coating liquid over time, which may make the formation of a favorable ink receiving layer impossible. As a result, in those cases where a cross-linking agent is added to the coating liquid for the ink receiving layer 12, the coating liquid is preferably split into at least two liquids, namely a liquid that contains the PVA component and a liquid that contains the cross-linking agent component, and may also be split into a plurality of liquids if required, with the separate liquids then mixed together continuously at the time of coating, and the mixed coating liquid then supplied to the coating process.

In order to ensure uniform mixing via a continuous mixing process, each of the liquids can be supplied to a tank while undergoing stirring with a stirrer, although depending on the intensity of the stirring, air may become incorporated within the coating liquid, forming foam, which can then cause cracking within the ink receiving layer. In order to achieve uniform mixing without generating foam within the coating liquid, the use of specific mixers, including dynamic continuous mixers such as in-line rotating mixers, and static continuous mixers such as static mixers, is preferred.

Furthermore, a cross-linking agent can also be added to the ink receiving layer 12 by employing a multilayer ink receiving layer 12, and applying an aqueous solution of the cross-linking agent between the multiple layers.

Examples of suitable coating devices for forming the ink receiving layer 12 include conventional coating devices such as a blade coater, air knife coater, roll coater, bar coater, gravure coater, spray coater, die coater, curtain coater, lip coater, slide bead coater, multi-coating slot die coater, multi-coating slide die coater, or multi-coating curtain die coater. In particular, a die coater, curtain coater, slide bead coater, multi-coating slot die coater, multi-coating slide die coater, or multi-coating curtain die coater produces superior uniformity in terms of the coating quantity, and is consequently preferred for glossy ink jet recording materials that are designed for high-precision recording.

There are no particular restrictions on the method used for drying the applied coating, and conventional drying systems such as hot-air drying, gas heater drying, highfrequency drying, electric heater drying, infrared heater drying, laser drying, or electron beam drying can be used.

Furthermore, in those cases where the adhesive of the ink receiving layer 12 is a PVA, a cross-linking agent-containing layer may also be formed between the support 11 and the ink receiving layer 12. This enables the occurrence of cracking to be suppressed, while the coating quantity of the ink receiving layer 12 is increased, thereby increasing the ink absorption volume of the ink receiving layer 12.

In order to form a cross-linking agent-containing layer between the support 11 and the ink receiving layer 12, a coating liquid containing the components of the aforementioned cross-linking agent-containing layer dispersed or dissolved within a solvent is applied to the support and dried, prior to the formation of the ink receiving layer 12. There are no particular restrictions on the solvent used for this coating liquid for forming the cross-linking agent layer, although for reasons such as coating suitability, water is preferred.

The coating quantity of the cross-linking agent-containing layer is preferably within a range from 0.1 to 3.0 g/m². If the coating quantity is less than 0.1 g/m², then not only is there a chance that the cross-linking agent-containing layer may not be able to be formed satisfactorily, but the effect of the cross-linking agent is also weak, meaning the coating quantity of the ink receiving layer 12 may not be able to be increased. In contrast if the coating quantity exceeds 3.0 g/m², then when the coating liquid for the ink receiving layer 12 is applied to the cross-linking agent-containing layer, there is a danger that the coating liquid for the ink receiving layer 12 may thicken immediately after application as a result of cross-linking, thereby making the application process difficult.

Examples of suitable coating devices for forming the cross-linking agent-containing layer include conventional coating devices such as a blade coater, air knife coater, roll coater, bar coater, gravure coater, spray coater, die coater, curtain coater, lip coater, slide bead coater, multi-coating slot die coater, multi-coating slide die coater, or multi-coating curtain die coater.

There are no particular restrictions on the method used for drying the applied coating, and conventional drying systems such as hot-air drying, gas heater drying, highfrequency drying, electric heater drying, infrared heater drying, laser drying, or electron beam drying can be used.

### (Formation of Gloss Layer)

Next, a gloss layer 30 is formed on top of the ink receiving layer 12 of the substrate 10. In order to form the gloss layer 30 on the substrate 10, a coating liquid containing the components of the aforementioned gloss layer dispersed within a solvent is press coated onto the substrate 10. There are no particular restrictions on the solvent for the coating liquid used in forming the gloss layer 30, although for reasons such as coating suitability, water is preferred.

The press coating of the coating liquid is conducted by passing the substrate 10 between a gloss roll 21 and a press roll 22 while the coating liquid applied to the ink receiving layer 12 is either still wet or in a semi-dried state.

The surface temperature of the gloss roll 21 is preferably within a range from 40 to 130°C, and even more preferably from 70 to 120°C, as such temperatures offer more favorable operability such as the drying conditions, and result in superior adhesion to the ink receiving layer 12, and a superior gloss level for the surface of the gloss layer. If the surface temperature of the gloss roll 21 is less than 40°C, then there is a danger of a deterioration in the surface strength of the ink jet recording material, and the adhesive of the ink receiving layer 12 becomes more difficult to soften, meaning adhesion to the ink receiving layer 12 tends to worsen. If the surface temperature exceeds 130°C, then the film formation of the adhesive within the ink receiving layer 12 may progress too far, causing a deterioration in the ink absorption properties, and there is also an increased danger that the coating liquid may boil, causing a deterioration in the resulting gloss surface.

The gloss roll 21 is preferably a metal roll, as such rolls provided excellent heat resistance and also excellent mirror surface characteristics. The center-line average roughness of the surface is preferably no higher than 10 µm.

There are no particular restrictions on the material used for forming the press roll 22, but because the roll is heated by the gloss roll, a heat-resistant resin is preferred.

The pressing performed by the press roll 22 is preferably conducted so that the linear pressure between the gloss roll 21 and the press roll 22 is within a range from 50 to 3,500 N/cm, and even more preferably from 200 to 3,000 N/cm. If the linear pressure between the gloss roll 21 and the press roll 22 is less than 50 N/cm, then applying a uniform linear pressure becomes difficult, and there is a danger of deterioration in the gloss characteristics, deterioration in the adhesion of the gloss layer to the ink receiving layer 12, and cracking occurring in the surface. If the linear pressure exceeds 3,500 N/cm, then the pressing procedure is conducted with excessive pressure, which can destroy air gaps within the ink receiving layer 12 and the gloss layer, leading to a deterioration in the ink absorption properties.

The coating quantity of the gloss layer, listed as a dried weight, is preferably within a range from 0.01 to 3 g/m², even more preferably from 0.03 to 2 g/m², and most preferably from 0.05 to 1 g/m². If this coating quantity is less than 0.01 g/m², then forming a satisfactory gloss layer becomes difficult, meaning the gloss level tends to fall. Furthermore, if the coating quantity exceeds 3 g/m², then although the desired gloss level can be readily achieved, the ink absorption and recording density properties tend to be prone to deterioration.

Furthermore, in those cases where primary particles of colloidal silica or alumina or the like are used as the fine particles of the gloss layer, the speed of ink absorption tends to fall, and consequently the thickness of the gloss layer is preferably kept within a range from 0.02 to 4 µm, and even more preferably from 0.05 to 2 µm. Furthermore, in order to achieve a favorable balance between the ink absorption volume and the ink absorption speed, the thickness of the gloss layer is preferably no more than 1/10th, and even more preferably no more than 1/20th, of the thickness of the entire ink receiving layer 12.

The press coating need not necessarily be conducted using the method shown in FIG. 1. In other words, although in the method shown in the figure, the gloss roll 21 and the press roll 22 were positioned side by side, a pool of the coating liquid was formed around the upper portion of the tangential line between the gloss roll 21 and the press roll 22, and the substrate 10 was then passed between the rolls in a vertical direction, the gloss roll and the press roll could also be positioned one above the other, with the coating liquid applied to the surface of the ink receiving layer, and the resulting laminate then passed horizontally between the rolls.

Furthermore, the method of forming the coating layers of the ink receiving layer and the gloss layer is not restricted to methods such as those described above which rely on the application of a coating liquid, and these coating layers could also be formed using a method such as that disclosed in Japanese Unexamined Patent Application, First Publication No. Hei 11-254817, wherein powdered coating layer components are mixed together, and this mixture is then fixed to a substrate using heat fusion.

### EXAMPLES

As follows is a more detailed description of the present invention using a series of examples, although the present invention is, of course, in no way limited by these examples. In the following examples, unless stated otherwise, the units "parts" and "%" refer to "parts by weight" and "weight %" respectively.

### [Example 1] (Production of Paper Support)

A softwood bleached kraft pulp (NBKP) that had been beaten to a CSF (JIS P 8121) value of 250 ml and a hardwood bleached kraft pulp (LBKP) that had been beaten to a CSF value of 250 ml were mixed together in a weight ratio of 2:8, yielding a pulp slurry with a concentration of 0.5%. To this pulp slurry were added, relative to the absolute dry weight of the pulp, 2.0% of cationized starch, 0.4% of alkylketene dimer, 0.1 % of anionized polyacrylamide resin, and 0.7% of polyamidepolyamineepichlorohydrin resin, and the resulting mixture was stirred thoroughly, yielding a pulp slurry for paper making. The pulp slurry of this composition was used for paper making using a Fourdrinier paper machine, and the resulting wet paper was passed through a dryer, a size press, and a machine calender, yielding a base paper with a basis weight of 180 g/m² and a density of 1.0 g/cm³. The size press liquid used in the size press step was prepared by mixing together carboxyl-modified polyvinyl alcohol and sodium chloride in a weight ratio of 2:1, and then adding this mixture to water and superheating to effect dissolution, thus forming a liquid with a concentration of 5%. This size press liquid was applied to both surfaces of the unsized base paper in a combined quantity of 25 ml/m², thus completing preparation of a size pressed base paper.

### (Preparation of Polyolefin Resin Composition 1)

35 parts of a long-chain low density polyethylene resin (density: 0.926 g/cm³, melt index: 20 g/10 min.), 50 parts of a low density polyethylene resin (density: 0.919 g/cm³, melt index: 2 g/10 min.), 15 parts of anatase titanium dioxide (brand name: A-220, manufactured by Ishihara Sangyo Kaisha, Ltd.), 0.1 parts of zinc stearate, 0.03 parts of an antioxidant (brand name: Irganox 1010, manufactured by Ciba Geigy Corporation), 0.09 parts of ultramarine blue (brand name: Bluish Ultramarine No. 2000, manufactured by Daiichi Kasei Co., Ltd.), and 0.3 parts of a fluorescent brightener (brand name: Uvitex OB, manufactured by Ciba Geigy Corporation) were mixed together to form a polyolefin resin composition 1.

### (Preparation of Polyolefin Resin Composition 2)

65 parts of a high density polyethylene resin (density: 0.954 g/cm³, melt index: 20 g/10 min.) and 35 parts of a low density polyethylene resin (density: 0.919 g/cm³, melt index: 2 g/10 min.) were subjected to melt mixing to form a polyolefin resin composition 2.

### (Production of Resin-coated Support)

Both surfaces of the above paper support were subjected to corona discharge treatment, and then a melt extruder with a T-die (at a melt temperature of 320°C) was used to apply the polyolefin resin composition 1, which had been mixed and dispersed using a Banbury mixer, to the felt surface of the paper support in a coating quantity of 20 g/m², while the polyolefin resin composition 2 was applied to the wire surface of the paper support in a coating quantity of 25 g/m². The felt surface was then cooled and solidified against a mirror-surface cooling roll whereas the wire surface was cooled and solidified against a rough cooling roll, thereby yielding a resin-coated support with a smoothness value (Oken smoothness, J. TAPPI No. 5) of 6,000 seconds and an opacity (JIS P 8138) of 93%.

### (Preparation of Coating Liquid for Second Ink Receiving Layer)

A composition containing 100 parts of a synthetic non-crystalline silica produced using a wet method (brand name: Sylojet 703A, manufactured by Grace Davison Co., Ltd.), 51 parts of a 7% aqueous solution of polyvinyl alcohol (brand name: PVA-145, polymerization degree: 4,500, saponification degree: 99%, manufactured by Kuraray Co., Ltd.), and 6 parts of water was stirred thoroughly, yielding a coating liquid for a second ink receiving layer.

### (Coating of Second Ink Receiving Layer)

Using a die coater, the coating liquid for the second ink receiving layer was applied to the resin-coated support in sufficient quantity to generate a dried coating quantity of 20 g/m², and was then dried, thus forming a second ink receiving layer. The thickness of the layer was 30 µm.

### (Preparation of First Ink Receiving Layer Coating Liquid A)

A silica produced by a gas phase method (brand name: Reolosil QS-30, average primary particle size: 9 nm, specific surface area: 300 m²/g, manufactured by Tokuyama Corporation) was subjected to repeated treatment using a combination of a step in which the silica was dispersed and pulverized within ion-exchanged water using a homomixer, and a step in which a nanomizer (brand name: nanomizer, manufactured by Nanomizer Co., Ltd.) was used to conduct further pulverization and dispersion, and the resulting dispersion was then classified, yielding a 10% dispersion with an average secondary particle size of 80 nm. To a quantity of this dispersion equivalent to a silica solid fraction of 100 parts was added 11 parts (solid fraction equivalent) of a polyvinylamine copolymer ammonium hydrochloride with a 5-membered ring amidine structure (brand name: Hymax SC-700M, molecular weight: 30,000, manufactured by Hymo Co., Ltd.) as a cationic compound, thus yielding a thickened aggregate dispersion. This thickened aggregate dispersion was once again repeatedly dispersed using the homomixer and pulverized and dispersed using the nanomizer, yielding a 10% cationized silica dispersion with an average secondary particle size of 200 nm. Subsequently, a composition containing 100 parts of this cationized silica dispersion, 26 parts of a 7% aqueous solution of polyvinyl alcohol (brand name: PVA-145, polymerization degree: 4,500, saponification degree: 99%, manufactured by Kuraray Co., Ltd.), and 22 parts of water was stirred thoroughly, yielding a first ink receiving layer coating liquid A.

### (Coating of First Ink Receiving Layer)

A 0.5% borax solution was applied to the second ink receiving layer with a bar coater in a quantity of 20 g/m², and the first ink receiving layer coating liquid A was then applied using a die coater in sufficient quantity to generate a dried coating quantity of 10 g/m², and was subsequently dried, thus forming a first ink receiving layer. The thickness of the layer was 18 µm.

### (Preparation of Cationic Pigment Dispersion 1)

40 parts of a 50% aqueous solution of polyaluminum chloride (brand name: Takibain #1500, manufactured by Taki Chemical Co., Ltd.) was diluted with 400 parts of ion-exchanged water, and the temperature was then raised to 30°C under constant stirring. Subsequently, 500 parts of an anionic primary particle-dispersed colloidal silica (brand name: Cataloid SI-50, average primary particle size: 25 nm, manufactured by Catalysts & Chemicals Ind. Co., Ltd.) was diluted with 700 parts of ion-exchanged water, and this diluted colloidal silica was then added, with constant stirring, to the above aqueous polyaluminum chloride solution at a rate of 8 parts per minute. Following completion of the addition, the mixture was stirred for one hour with the temperature held at 35°C. Subsequently, a cross-collision-type pulverizer known as an ultimizer system (model number: HJP-25005, manufactured by Sugino Machine Ltd.) was used to repeatedly pulverize and disperse the mixture under a pressure of 200 MPa, and ion-exchanged water was then added, yielding a 16% cationic pigment dispersion 1 with an average particle size of 35 nm. When this dispersion was diluted to 1% with ion-exchanged water and then measured using a zeta potential measurement device (model number: Zetasizer 2000, manufactured by Malvern Instruments Ltd.), the zeta potential was 52.9 mV.

### (Preparation of Composite Fine Particles Dispersion A)

The cationic pigment dispersion 1 described above was diluted to 10% with ion-exchanged water, 459 parts of the resulting dispersion was added with constant stirring to 83 parts of a 5% aqueous solution of an anionic compound (a sodium salt of an acrylic acid-maleic acid copolymer (brand name: Poiz 520, manufactured by Kao Corporation)), a further 14 parts of ion-exchanged water was added, and the resulting mixture was dispersed for approximately 30 minutes using a homomixer (rotational speed: 1,500 rpm).

A cross-collision-type pulverizer known as an ultimizer system (model number: HJP-25005, Sugino Machine Ltd.) was then used to repeatedly pulverize and disperse the dispersion under a pressure of 150 MPa, yielding a 9% composite fine particles dispersion A with an average particle size of 40 nm. When this dispersion was diluted to 0.5% with ion-exchanged water and then measured using a zeta potential measurement device (model number: Zetasizer 2000, manufactured by Malvern Instruments Ltd.), the zeta potential was -40.0 mV.

### (Preparation of Gloss Layer Coating Liquid A)

A composition containing 163 parts of the composite fine particles dispersion A, 2 parts of ammonium oleate (brand name: DEF-116T, manufactured by Nissin Kagaku Kenkyusho Co., Ltd.), 7 parts of an acetylene glycol ethylene oxide adduct (brand name: Olfin E1004, manufactured by Nissin Chemical Industry Co., Ltd.), and 827 parts of water was stirred thoroughly, yielding a gloss layer coating liquid A.

### (Production of Ink jet Recording Material)

The gloss layer coating liquid A was applied to the surface of the substrate, which included the ink receiving layer provided on top of the resin-coated support, using the apparatus shown in FIG. 1, simultaneously subjected to crimping at a linear pressure of 2,000 N/cm using a chrome-plated mirror-surface drum that had been heated to a surface temperature of 100°C, and was then separated from the mirror-surface roll and dried in a dryer, thus forming a gloss layer and completing production of an ink jet recording material. The thickness of the gloss layer was 0.2 µm.

### [Example 2]

With the exception of using a gloss layer coating liquid B described below instead of the aforementioned gloss layer coating liquid A, an ink jet recording material was produced in the same manner as the example 1. The thickness of the gloss layer was 0.2 µm.

### (Preparation of Composite Fine Particles Dispersion B)

The cationic pigment dispersion 1 described above was diluted to 10% with ion-exchanged water, 467 parts of the resulting dispersion was added with constant stirring to 65 parts of a 5% aqueous solution of an anionic compound (a sodium salt of an acrylic acid homopolymer (brand name: Poiz 530, manufactured by Kao Corporation)), a further 23 parts of ion-exchanged water was added, and the resulting mixture was dispersed for approximately 30 minutes using a homomixer (rotational speed: 1,500 rpm). A cross-collision-type pulverizer known as an ultimizer system (model number: HJP-25005, Sugino Machine Ltd.) was then used to repeatedly pulverize and disperse the dispersion under a pressure of 150 MPa, yielding a 9% composite fine particles dispersion B with an average particle size of 40 nm. When this dispersion was diluted to 0.5% with ion-exchanged water and then measured using a zeta potential measurement device (model number: Zetasizer 2000, manufactured by Malvern Instruments Ltd.), the zeta potential was -54.7 mV.

### (Preparation of Gloss Layer Coating Liquid B)

With the exception of replacing the 163 parts of the composite fine particles dispersion A with 163 parts of the composite fine particles dispersion B, a gloss layer coating liquid B was prepared in the same manner as the preparation of the gloss layer coating liquid A of the example 1.

### [Example 3]

With the exception of using a gloss layer coating liquid C described below instead of the aforementioned gloss layer coating liquid A, an ink jet recording material was produced in the same manner as the example 1. The thickness of the gloss layer was 0.2 µm.

### (Preparation of Cationic Pigment Dispersion 2)

An anionic primary particle-dispersed colloidal silica (brand name: Cataloid SI-50, average primary particle size: 25 nm, manufactured by Catalysts & Chemicals Ind. Co., Ltd.) was diluted to a concentration of 20% with ion-exchanged water, and 500 parts of this dispersion was added with constant stirring to 100 parts of a 5% aqueous solution of a cationic compound (a diallylamine-based polymer (brand name: PAS-H-10L, molecular weight: approximately 200,000, a quaternary ammonium compound, manufactured by Nitto Boseki Co., Ltd.)), a further 18 parts of ion-exchanged water was added, and the resulting mixture was dispersed for approximately 30 minutes using a homomixer (rotational speed: 1,500 rpm). A cross-collision-type pulverizer known as an ultimizer system (model number: HJP-25005, Sugino Machine Ltd.) was then used to repeatedly pulverize and disperse the dispersion under a pressure of 150 MPa, yielding a 17% cationic pigment dispersion 2 with an average particle size of 30 nm. When this dispersion was diluted to 1% with ion-exchanged water and then measured using a zeta potential measurement device (model number: Zetasizer 2000, manufactured by Malvern Instruments Ltd.), the zeta potential was 55.1 mV.

### (Preparation of Composite Fine Particles Dispersion C)

With the exception of using the cationic pigment dispersion 2 instead of the cationic pigment dispersion 1, the same method as that used in the preparation of the composite fine particles dispersion B in the example 2 was used to prepare a 9% composite fine particles dispersion C with an average particle size of 35 nm. When this dispersion was diluted to 0.5% with ion-exchanged water and then measured using a zeta potential measurement device (model number: Zetasizer 2000, manufactured by Malvern Instruments Ltd.), the zeta potential was -49.4 mV.

### (Preparation of Gloss Layer Coating Liquid C)

With the exception of replacing the 163 parts of the composite fine particles dispersion A with 163 parts of the composite fine particles dispersion C, a gloss layer coating liquid C was prepared in the same manner as the preparation of the gloss layer coating liquid A of the example 1.

### [Example 4]

With the exception of using a gloss layer coating liquid D described below instead of the aforementioned gloss layer coating liquid A, an ink jet recording material was produced in the same manner as the example 1. The thickness of the gloss layer was 0.2 µm.

### (Preparation of Composite Fine Particles Dispersion D)

With the exception of using a cationic primary particle-dispersed colloidal silica (brand name: Snowtex AK-L, average primary particle size: 45 nm, manufactured by Nissan Chemical Industries, Ltd.) instead of the cationic pigment dispersion 1, the same method as that used in the preparation of the composite fine particles dispersion B in the example 2 was used to prepare a 9% composite fine particles dispersion D with an average particle size of 50 nm. When this dispersion was diluted to 0.5% with ion-exchanged water and then measured using a zeta potential measurement device (model number: Zetasizer 2000, manufactured by Malvern Instruments Ltd.), the zeta potential was -53.7 mV.

### (Preparation of Gloss Layer Coating Liquid D)

With the exception of replacing the 163 parts of the composite fine particles dispersion A with 163 parts of the composite fine particles dispersion D, a gloss layer coating liquid D was prepared in the same manner as the preparation of the gloss layer coating liquid A of the example 1.

### [Example 5]

With the exception of using a gloss layer coating liquid E described below instead of the aforementioned gloss layer coating liquid A, an ink jet recording material was produced in the same manner as the example 1. The thickness of the gloss layer was 0.2 µm.

### (Preparation of Composite Fine Particles Dispersion E)

With the exception of using a cationic primary particle-dispersed colloidal silica (brand name: Sylojet 4000C, average primary particle size: 35 nm, manufactured by Grace Davison Co., Ltd.) instead of the cationic pigment dispersion 1, the same method as that used in the preparation of the composite fine particles dispersion B in the example 2 was used to prepare a 9% composite fine particles dispersion E with an average particle size of 40 nm. When this dispersion was diluted to 0.5% with ion-exchanged water and then measured using a zeta potential measurement device (model number: Zetasizer 2000, manufactured by Malvern Instruments Ltd.), the zeta potential was -55.2 mV.

### (Preparation of Gloss Layer Coating Liquid E)

With the exception of replacing the 163 parts of the composite fine particles dispersion A with 163 parts of the composite fine particles dispersion E, a gloss layer coating liquid E was prepared in the same manner as the preparation of the gloss layer coating liquid A of the example 1.

### [Example 6]

With the exception of using a gloss layer coating liquid F described below instead of the aforementioned gloss layer coating liquid A, an ink jet recording material was produced in the same manner as the example 1. The thickness of the gloss layer was 0.2 µm.

### (Preparation of Composite Fine Particles Dispersion F)

With the exception of using a cationic primary particle-dispersed colloidal silica (brand name: Sylojet 4001, average primary particle size: 35 nm, manufactured by Grace Davison Co., Ltd.) instead of the cationic pigment dispersion 1, the same method as that used in the preparation of the composite fine particles dispersion B in the example 2 was used to prepare a 9% composite fine particles dispersion F with an average particle size of 40 nm. When this dispersion was diluted to 0.5% with ion-exchanged water and then measured using a zeta potential measurement device (model number: Zetasizer 2000, manufactured by Malvern Instruments Ltd.), the zeta potential was -45.5 mV.

### (Preparation of Gloss Layer Coating Liquid F)

With the exception of replacing the 163 parts of the composite fine particles dispersion A with 163 parts of the composite fine particles dispersion F, a gloss layer coating liquid F was prepared in the same manner as the preparation of the gloss layer coating liquid A of the example 1.

### [Example 7]

With the exception of using a gloss layer coating liquid G described below instead of the aforementioned gloss layer coating liquid A, an ink jet recording material was produced in the same manner as the example 1. The thickness of the gloss layer was 0.2 µm.

### (Preparation of Cationic Pigment Dispersion 3)

500 parts of a 0.2% aqueous solution of hydrochloric acid was added to 3,175 parts of ion-exchanged water, and with the solution undergoing constant stirring, 500 parts of a γ-crystalline alumina powder (brand name: AKP-G015, average primary particle size: 15 nm, average particle size: 2.4 µm, manufactured by Sumitomo Chemical Co., Ltd.) was then added and dispersed, before the temperature of the dispersion was raised to 80°C under continued stirring. Subsequently, 2,500 parts of a strongly acidic cation exchange resin (brand name: Bio-Rex MS2-501, manufactured by Bio-Rad Laboratories, Inc.) was added gradually under constant stirring, and following completion of this addition, the resulting mixture was stirred for 10 hours with the temperature maintained at 80°C. Subsequently, the temperature was cooled to room temperature, the ion exchange resin was removed, and the dispersion was concentrated, yielding a 12% cationic pigment dispersion 3 with an average particle size of 110 nm. When this dispersion was diluted to 0.05% with ion-exchanged water and then measured using a zeta potential measurement device (model number: Zetasizer 2000, manufactured by Malvern Instruments Ltd.), the zeta potential was 52.1 mV.

### (Preparation of Composite Fine Particles Dispersion G)

With the exceptions of replacing the 467 parts of the 10% dispersion of the cationic pigment dispersion 1 with 455 parts of a 10% dispersion of the cationic pigment dispersion 3, altering the quantity of the 5% aqueous solution of the anionic compound (the sodium salt of an acrylic acid homopolymer) from 65 parts to 91 parts, and altering the quantity of ion-exchanged water from 23 parts to 10 parts, the same method as that used in the preparation of the composite fine particles dispersion B in the example 2 was used to prepare a 9% composite fine particles dispersion G with an average particle size of 120 nm. When this dispersion was diluted to 0.05% with ion-exchanged water and then measured using a zeta potential measurement device (model number: Zetasizer 2000, manufactured by Malvern Instruments Ltd.), the zeta potential was -43.7 mV.

### (Preparation of Gloss Layer Coating Liquid G)

With the exception of replacing the 163 parts of the composite fine particles dispersion A with 163 parts of the composite fine particles dispersion G, a gloss layer coating liquid G was prepared in the same manner as the preparation of the gloss layer coating liquid A of the example 1.

### [Example 8]

With the exception of using a gloss layer coating liquid H described below instead of the aforementioned gloss layer coating liquid A, an ink jet recording material was produced in the same manner as the example 1. The thickness of the gloss layer was 0.2 µm.

### (Preparation of Composite Fine Particles Dispersion H)

463 parts of a pseudoboehmite sol (brand name: Cataloid AS-3, average primary particle size: 9 nm, average particle size: 200 nm, manufactured by Catalysts & Chemicals Ind. Co., Ltd.) was added with constant stirring to 59 parts of the 5% aqueous solution of an anionic compound (the sodium salt of an acrylic acid homopolymer), a further 49 parts of ion-exchanged water was added, and the resulting mixture was dispersed for approximately 30 minutes using a homomixer (rotational speed: 1,500 rpm), yielding a 7% composite fine particles dispersion H with an average particle size of 300 nm. When this dispersion was diluted to 0.05% with ion-exchanged water and then measured using a zeta potential measurement device (model number: Zetasizer 2000, manufactured by Malvern Instruments Ltd.), the zeta potential was -39.3 mV.

### (Preparation of Gloss Layer Coating Liquid H)

With the exceptions of replacing the 163 parts of the composite fine particles dispersion A with 210 parts of the composite fine particles dispersion H, and altering the quantity of water from 827 parts to 781 parts, a gloss layer coating liquid H was prepared in the same manner as the preparation of the gloss layer coating liquid A of the example 1.

### [Example 9]

With the exception of using a gloss layer coating liquid I described below instead of the aforementioned gloss layer coating liquid A, an ink jet recording material was produced in the same manner as the example 1. The thickness of the gloss layer was 0.2 µm.

### (Preparation of Composite Fine Particles Dispersion I)

The composite fine particles dispersion H was subjected to repeated pulverization and dispersion under a pressure of 150 MPa using a cross-collision-type pulverizer known as an ultimizer system (model number: HJP-25005, Sugino Machine Ltd.), thereby yielding a 7% composite fine particles dispersion I with an average particle size of 110 nm. When this dispersion was diluted to 0.05% with ion-exchanged water and then measured using a zeta potential measurement device (model number: Zetasizer 2000, manufactured by Malvern Instruments Ltd.), the zeta potential was -48.1 mV.

### (Preparation of Gloss Layer Coating Liquid I)

With the exception of replacing the 210 parts of the composite fine particles dispersion H with 210 parts of the composite fine particles dispersion I, a gloss layer coating liquid I was prepared in the same manner as the preparation of the gloss layer coating liquid H of the example 8.

### [Example 10]

With the exception of using a gloss layer coating liquid J described below instead of the aforementioned gloss layer coating liquid A, an inkjet recording material was produced in the same manner as the example 1. The thickness of the gloss layer was 0.2 µm.

### (Preparation of Cationic Pigment Dispersion 4)

An alumina sol produced by a gas phase method and containing 60% 0-crystals, 20% γ-crystals, and 20% δ-crystals (brand name: Cab-O-Sperse PG 003, average primary particle size: 20 nm, average particle size: 150 nm, manufactured by Cabot Corporation) was subjected to repeated pulverization and dispersion under a pressure of 200 MPa using a cross-collision-type pulverizer known as an ultimizer system (model number: HJP-25005, Sugino Machine Ltd.), thereby yielding a 40% cationic pigment dispersion 4 with an average particle size of 100 nm. When this dispersion was diluted to 0.05% with ion-exchanged water and then measured using a zeta potential measurement device (model number: Zetasizer 2000, manufactured by Malvern Instruments Ltd.), the zeta potential was 61.5 mV.

### (Preparation of Composite Fine Particles Dispersion J)

With the exception of using the cationic pigment dispersion 4 instead of the cationic pigment dispersion 1, the same method as that used in the preparation of the composite fine particles dispersion B in the example 2 was used to prepare a 9% composite fine particles dispersion J with an average particle size of 105 nm. When this dispersion was diluted to 0.05% with ion-exchanged water and then measured using a zeta potential measurement device (model number: Zetasizer 2000, manufactured by Malvern Instruments Ltd.), the zeta potential was -58.6 mV.

### (Preparation of Gloss Layer Coating Liquid J)

With the exception of replacing the 163 parts of the composite fine particles dispersion A with 163 parts of the composite fine particles dispersion J, a gloss layer coating liquid J was prepared in the same manner as the preparation of the gloss layer coating liquid A of the example 1.

### [Example 11]

With the exception of using a gloss layer coating liquid K described below instead of the aforementioned gloss layer coating liquid A, an ink jet recording material was produced in the same manner as the example 1. The thickness of the gloss layer was 0.2 µm.

### (Preparation of Gloss Layer Coating Liquid K)

With the exception of replacing the 163 parts of the composite fine particles dispersion A with 122 parts of the composite fine particles dispersion C and 41 parts of the composite fine particles dispersion G, a gloss layer coating liquid K was prepared in the same manner as the preparation of the gloss layer coating liquid A of the example 1.

### [Example 12]

With the exception of using a gloss layer coating liquid L described below instead of the aforementioned gloss layer coating liquid A, an ink jet recording material was produced in the same manner as the example 1. The thickness of the gloss layer was 0.2 µm.

### (Preparation of Gloss Layer Coating Liquid L)

With the exception of replacing the 163 parts of the composite fine particles dispersion A with 122 parts of the composite fine particles dispersion F and 41 parts of the composite fine particles dispersion G, a gloss layer coating liquid L was prepared in the same manner as the preparation of the gloss layer coating liquid A of the example 1.

### [Example 13]

With the exception of using a first ink receiving layer coating liquid B described below instead of the first ink receiving layer coating liquid A, an ink jet recording material was produced in the same manner as the example 6. The dried coating quantity of the first ink receiving layer was 10 g/m², and the thickness of the layer was 18 µm.

### (Preparation of First Ink Receiving Layer Coating Liquid B)

100 parts of a silica produced by a gas phase method (brand name: Aerosil 300, average primary particle size: 7 nm, specific surface area: 300 m²/g, manufactured by Nippon Aerosil Co., Ltd.), 50 parts of a 20% aqueous solution of a 50 mol% methoxycarbonyl-modified polyallylamine hydrochloride (weight average molecular weight: approximately 15,000), and 497 parts of ion-exchanged water were mixed together. The thus obtained mixture was then dispersed using a stirring device, and then dispersed and pulverized using a nanomizer. Subsequently, the thus obtained treated liquid was combined with a composition containing 283 parts of a 7% aqueous solution of a polyvinyl alcohol (brand name: PVA-145, manufactured by Kuraray Co., Ltd., saponification degree: 99%, average polymerization degree: 4,500) and 368 parts of water, and then stirred thoroughly, yielding a first ink receiving layer coating liquid B.

### [Example 14]

With the exception of using a first ink receiving layer coating liquid C described below instead of the first ink receiving layer coating liquid A, an ink jet recording material was produced in the same manner as the example 6. The dried coating quantity of the first ink receiving layer was 10 g/m², and the thickness of the layer was 17 µm.

### (Preparation of First Ink Receiving Layer Coating Liquid C)

100 parts of a silica produced by a gas phase method (brand name: Aerosil 300, average primary particle size: 7 nm, specific surface area: 300 m²/g, manufactured by Nippon Aerosil Co., Ltd.), 50 parts of a 20% aqueous solution of a 50 mol% methoxycarbonyl-modified polyallylamine hydrochloride (weight average molecular weight: approximately 15,000), and 497 parts of ion-exchanged water were mixed together. The thus obtained mixture was then dispersed using a stirring device, and then dispersed and pulverized using a nanomizer. Subsequently, the thus obtained treated liquid was combined with a composition containing 346 parts of a 7% aqueous solution of a polyvinyl alcohol (brand name: PVA-245, manufactured by Kuraray Co., Ltd., saponification degree: 88%, average polymerization degree: 4,500) and 349 parts of water, and then stirred thoroughly, yielding a first ink receiving layer coating liquid C.

### [Example 15]

### (Preparation of Coating Liquid for Cross-linking Agent-Containing Layer)

1 part of cationized cellulose (brand name: Poiz C-150L, manufactured by Kao Corporation, average polymerization degree: 1,500) was added to 874 parts of hot water at 50°C and dissolved by stirring, and 50 parts of borax was then added and dissolved under stirring. Subsequently, 75 parts of a 0.1 % aqueous solution of an acetylene glycol ethylene oxide adduct (brand name: Olfin E1004, manufactured by Nissin Chemical Industry Co., Ltd.) was added and stirred, yielding a coating liquid for a cross-linking agent-containing layer.

### (Coating of Cross-Linking Agent-Containing Layer)

Using a bar coater, the coating liquid for the cross-linking agent-containing layer was applied to the resin-coated support in sufficient quantity to generate a dried coating quantity of 1.2 g/m², and was then dried, thus forming a cross-linking agent-containing layer.

### (Preparation of First Ink Receiving Layer Coating Liquid D)

100 parts of a silica produced by a gas phase method (brand name: Aerosil 300, average primary particle size: 7 nm, specific surface area: 300 m²/g, manufactured by Nippon Aerosil Co., Ltd.), 50 parts of a 20% aqueous solution of a 50 mol% methoxycarbonyl-modified polyallylamine hydrochloride (weight average molecular weight: approximately 15,000), and 497 parts of ion-exchanged water were mixed together. The thus obtained mixture was then dispersed using a stirring device, and then dispersed and pulverized using a nanomizer. Subsequently, the thus obtained treated liquid was combined with a composition containing 302 parts of a 8% aqueous solution of a polyvinyl alcohol (brand name: PVA-245, manufactured by Kuraray Co., Ltd., saponification degree: 88%, average polymerization degree: 4,500) and 9 parts of water, and then stirred thoroughly, yielding a first ink receiving layer coating liquid D.

### (Coating of First Ink Receiving Layer)

Using a die coater, the first ink receiving layer coating liquid D was applied to the cross-linking agent-containing layer provided on the resin-coated support in sufficient quantity to generate a dried coating quantity of 30 g/m², and was then dried, thus forming a first ink receiving layer. The thickness of the layer was 51 µm.

### (Production of Ink jet Recording Material)

The gloss layer coating liquid F described above was applied to the surface of the substrate, which contained the cross-linking agent-containing layer and the ink receiving layer provided sequentially on top of the resin-coated support, using the apparatus shown in FIG. 1, was simultaneously subjected to crimping at a linear pressure of 2,000 N/cm using a chrome-plated mirror-surface drum that had been heated to a surface temperature of 100°C, and was then separated from the mirror-surface roll and dried in a dryer, thus forming a gloss layer and completing production of an ink jet recording material. The thickness of the gloss layer was 0.2 µm.

### [Example 16]

### (Preparation of Fine Particles Component Liquid for First Ink Receiving Layer Coating Liquid E)

100 parts of a silica produced by a gas phase method (brand name: Aerosil 300, average primary particle size: 7 nm, specific surface area: 300 m²/g, manufactured by Nippon Aerosil Co., Ltd.), 50 parts of a 20% aqueous solution of a 50 mol% methoxycarbonyl-modified polyallylamine hydrochloride (weight average molecular weight: approximately 15,000), and 497 parts of ion-exchanged water were mixed together. The thus obtained mixture was then dispersed using a stirring device, and then dispersed and pulverized using a nanomizer. Subsequently, 76 parts of water was mixed into the thus obtained treated liquid, thus yielding a fine particles component liquid for a first ink receiving layer coating liquid E.

### (Preparation of PVA Component Liquid for First Ink Receiving Layer Coating Liquid E)

A composition containing 346 parts of a 7% aqueous solution of a polyvinyl alcohol (brand name: PVA-235, manufactured by Kuraray Co., Ltd., saponification degree: 88%, average polymerization degree: 3,500) and 68 parts of water was stirred thoroughly, yielding a PVA component liquid for the first ink receiving layer coating liquid E.

### (Preparation of Cross-linking Agent Component Liquid for First Ink Receiving Layer Coating Liquid E)

2 parts of boric acid was added to 101 parts of hot water at 50°C and dissolved by stirring, thereby yielding a cross-linking agent component liquid for the first ink receiving layer coating liquid E.

### (Preparation of First Ink Receiving Layer Coating Liquid E)

The fine particles component liquid for the first ink receiving layer coating liquid E, the PVA component liquid for the first ink receiving layer coating liquid E, and the cross-linking agent component liquid for the first ink receiving layer coating liquid E were mixed by continuous supply to a static mixer in the weight ratio shown below, thereby yielding a first ink receiving layer coating liquid E. The static mixer employed two 18-element mixers connected together.

### (Weight Ratio of each Component Liquid)

| | |
|---|---|
| Fine particles component liquid for the first ink receiving layer coating liquid E | 7 |
| PVA component liquid for the first ink receiving layer coating liquid E | 4 |
| Cross-linking agent component liquid for the first ink receiving layer coating liquid E | 1 |

### (Coating of First Ink Receiving Layer)

Using a die coater, the first ink receiving layer coating liquid E was applied to the resin-coated support in sufficient quantity to generate a dried coating quantity of 23 g/m², and was then dried, thus forming a first ink receiving layer. The thickness of the layer was 39 µm.

### (Production of Ink jet Recording Material)

The gloss layer coating liquid F described above was applied to the surface of the substrate, which contained the ink receiving layer provided on top of the resin-coated support, using the apparatus shown in FIG. 1, was simultaneously subjected to crimping at a linear pressure of 2,000 N/cm using a chrome-plated mirror-surface drum that had been heated to a surface temperature of 100°C, and was then separated from the mirror-surface roll and dried in a dryer, thus forming a gloss layer and completing production of an ink jet recording material. The thickness of the gloss layer was 0.2 µm.

### [Example 17]

With the exception of using the first ink receiving layer coating liquid E described above instead of the first ink receiving layer coating liquid D, an ink jet recording material was produced in the same manner as the example 15. The dried coating quantity of the first ink receiving layer was 32 g/m², and the thickness of the layer was 54 µm.

### [Example 18]

With the exception of using a gloss layer coating liquid X described below instead of the gloss layer coating liquid F, an ink jet recording material was produced in the same manner as any one of examples 6, 15, and 16. The thickness of the gloss layer was 0.2 µm.

### (Preparation of Casein Solution)

4 parts of a 27% ammonia aqueous solution was added to 226 parts of hot water at 50°C with constant stirring, and then 40 parts of casein (brand name: lactic casein made in New Zealand) was added and stirred, thereby yielding a casein solution.

### (Preparation of Gloss Layer Coating Liquid X)

A composition containing 446 parts of the composite fine particles dispersion F, 5 parts of ammonium oleate (brand name: DEF-116T, manufactured by Nissin Kagaku Kenkyusho Co., Ltd.), 20 parts of an acetylene glycol ethylene oxide adduct (brand name: Olfin E1004, manufactured by Nissin Chemical Industry Co., Ltd.), 27 parts of the above casein solution, and 2502 parts of water was stirred thoroughly, yielding a gloss layer coating liquid X.

### [Comparative Example 1]

With the exception of using a gloss layer coating liquid M described below instead of the aforementioned gloss layer coating liquid A, an ink jet recording material was produced in the same manner as the example 1. The thickness of the gloss layer was 0.2 µm.

### (Preparation of Gloss Layer Coating Liquid M)

With the exceptions of replacing the 163 parts of the composite fine particles dispersion A with 70 parts of an anionic primary particle-dispersed colloidal silica (brand name: Snowtex OL, average primary particle size: 45 nm, manufactured by Nissan Chemical Industries, Ltd.), and altering the quantity of water from 827 parts to 921 parts, the same method as that used in the preparation of the gloss layer coating liquid A in the example 1 was used to prepare a gloss layer coating liquid M. When the above colloidal silica was diluted to 0.5% with ion-exchanged water and then measured using a zeta potential measurement device (model number: Zetasizer 2000, manufactured by Malvern Instruments Ltd.), the zeta potential was -51.9 mV.

### [Comparative Example 2]

With the exception of using a gloss layer coating liquid N described below instead of the aforementioned gloss layer coating liquid A, an ink jet recording material was produced in the same manner as the example 1. The thickness of the gloss layer was 0.2 µm.

### (Preparation of Gloss Layer Coating Liquid N)

With the exceptions of replacing the 163 parts of the composite fine particles dispersion A with 37 parts of an anionic primary particle-dispersed colloidal silica (brand name: Sylojet 4000A, average primary particle size: 35 nm, manufactured by Grace Davison Co., Ltd.), and altering the quantity of water from 827 parts to 954 parts, the same method as that used in the preparation of the gloss layer coating liquid A in the example 1 was used to prepare a gloss layer coating liquid N. When the above colloidal silica was diluted to 0.5% with ion-exchanged water and then measured using a zeta potential measurement device (model number: Zetasizer 2000, manufactured by Malvern Instruments Ltd.), the zeta potential was -51.6 mV.

### [Comparative Example 3]

With the exception of using a gloss layer coating liquid O described below instead of the aforementioned gloss layer coating liquid A, an ink jet recording material was produced in the same manner as the example 1. The thickness of the gloss layer was 0.2 µm.

### (Preparation of Gloss Layer Coating Liquid O)

With the exceptions of replacing the 163 parts of the composite fine particles dispersion A with 36 parts of an anionic primary particle-dispersed colloidal silica (brand name: Cataloid SI-45P, average primary particle size: 45 nm, manufactured by Catalysts & Chemicals Ind. Co., Ltd.), and altering the quantity of water from 827 parts to 955 parts, the same method as that used in the preparation of the gloss layer coating liquid A in the example 1 was used to prepare a gloss layer coating liquid O. When the above colloidal silica was diluted to 0.5% with ion-exchanged water and then measured using a zeta potential measurement device (model number: Zetasizer 2000, manufactured by Malvern Instruments Ltd.), the zeta potential was -45.1 mV.

### [Comparative Example 4]

With the exception of using a gloss layer coating liquid P described below instead of the aforementioned gloss layer coating liquid A, an ink jet recording material was produced in the same manner as the example 1. The thickness of the gloss layer was 0.2 µm.

### (Preparation of Gloss Layer Coating Liquid P)

A composition containing 89 parts of the cationic pigment dispersion 1, 3 parts of stearyltrimethylammonium chloride (brand name: Quartamin 86W, manufactured by Kao Corporation), 7 parts of an acetylene glycol ethylene oxide adduct (brand name: Olfin E1004, manufactured by Nissin Chemical Industry Co., Ltd.), and 901 parts of water was stirred thoroughly, yielding a gloss layer coating liquid P.

### [Comparative Example 5]

With the exception of using a gloss layer coating liquid Q described below instead of the aforementioned gloss layer coating liquid A, an ink jet recording material was produced in the same manner as the example 1. The thickness of the gloss layer was 0.2 µm.

### (Preparation of Gloss Layer Coating Liquid Q)

With the exceptions of replacing the 89 parts of the cationic pigment dispersion 1 with 84 parts of the cationic pigment dispersion 2, and altering the quantity of water from 901 parts to 906 parts, the same method as that used in the preparation of the gloss layer coating liquid P in the comparative example 4 was used to prepare a gloss layer coating liquid Q.

### [Comparative Example 6]

With the exception of using a gloss layer coating liquid R described below instead of the aforementioned gloss layer coating liquid A, an ink jet recording material was produced in the same manner as the example 1. The thickness of the gloss layer was 0.2 µm.

### (Preparation of Gloss Layer Coating Liquid R)

With the exceptions of replacing the 89 parts of the cationic pigment dispersion 1 with 68 parts of a cationic primary particle-dispersed colloidal silica (brand name:
Snowtex AK-L, average primary particle size: 45 nm, manufactured by Nissan Chemical Industries, Ltd.), and altering the quantity of water from 901 parts to 922 parts, the same method as that used in the preparation of the gloss layer coating liquid P in the comparative example 4 was used to prepare a gloss layer coating liquid R. When the above colloidal silica was diluted to 0.5% with ion-exchanged water and then measured using a zeta potential measurement device (model number: Zetasizer 2000, manufactured by Malvern Instruments Ltd.), the zeta potential was 51.1 mV.

### [Comparative Example 7]

With the exception of using a gloss layer coating liquid S described below instead of the aforementioned gloss layer coating liquid A, an ink jet recording material was produced in the same manner as the example 1. The thickness of the gloss layer was 0.2 µm.

### (Preparation of Gloss Layer Coating Liquid S)

With the exceptions of replacing the 89 parts of the cationic pigment dispersion 1 with 36 parts of a cationic primary particle-dispersed colloidal silica (brand name:
Sylojet 4000C, average primary particle size: 35 nm, manufactured by Grace Davison Co., Ltd.), and altering the quantity of water from 901 parts to 955 parts, the same method as that used in the preparation of the gloss layer coating liquid P in the comparative example 4 was used to prepare a gloss layer coating liquid S. When the above colloidal silica was diluted to 0.5% with ion-exchanged water and then measured using a zeta potential measurement device (model number: Zetasizer 2000, manufactured by Malvern Instruments Ltd.), the zeta potential was 49.9 mV.

### [Comparative Example 8]

With the exception of using a gloss layer coating liquid T described below instead of the aforementioned gloss layer coating liquid A, an ink jet recording material was produced in the same manner as the example 1. The thickness of the gloss layer was 0.2 µm.

### (Preparation of Gloss Layer Coating Liquid T)

With the exceptions of replacing the 89 parts of the cationic pigment dispersion 1 with 36 parts of a cationic primary particle-dispersed colloidal silica (brand name:
Sylojet 4001, average primary particle size: 35 nm, manufactured by Grace Davison Co., Ltd.), and altering the quantity of water from 901 parts to 955 parts, the same method as that used in the preparation of the gloss layer coating liquid P in the comparative example 4 was used to prepare a gloss layer coating liquid T. When the above colloidal silica was diluted to 0.5% with ion-exchanged water and then measured using a zeta potential measurement device (model number: Zetasizer 2000, manufactured by Malvern Instruments Ltd.), the zeta potential was 46.3 mV.

### [Comparative Example 9]

With the exception of using a gloss layer coating liquid U described below instead of the aforementioned gloss layer coating liquid A, an ink jet recording material was produced in the same manner as the example 1. The thickness of the gloss layer was 0.2 µm.

### (Preparation of Gloss Layer Coating Liquid U)

With the exceptions of replacing the 89 parts of the cationic pigment dispersion 1 with 119 parts of the cationic pigment dispersion 3, and altering the quantity of water from 901 parts to 871 parts, the same method as that used in the preparation of the gloss layer coating liquid P in the comparative example 4 was used to prepare a gloss layer coating liquid U.

### [Comparative Example 10]

With the exception of using a gloss layer coating liquid V described below instead of the aforementioned gloss layer coating liquid A, an inkjet recording material was produced in the same manner as the example 1. The thickness of the gloss layer was 0.2 µm.

### (Preparation of Gloss Layer Coating Liquid V)

With the exceptions of replacing the 89 parts of the cationic pigment dispersion 1 with 178 parts of a cationic pseudoboehmite sol (brand name: Cataloid AS-3, average primary particle size: 9 nm, average particle size: 200 nm, manufactured by Catalysts & Chemicals Ind. Co., Ltd.), and altering the quantity of water from 901 parts to 812 parts, the same method as that used in the preparation of the gloss layer coating liquid P in the comparative example 4 was used to prepare a gloss layer coating liquid V. When the above pseudoboehmite sol was diluted to 0.5% with ion-exchanged water and then measured using a zeta potential measurement device (model number: Zetasizer 2000, manufactured by Malvern Instruments Ltd.), the zeta potential was 36.2 mV.

### [Comparative Example 11]

With the exception of using a gloss layer coating liquid W described below instead of the aforementioned gloss layer coating liquid A, an ink jet recording material was produced in the same manner as the example 1. The thickness of the gloss layer was 0.2 µm.

### (Preparation of Gloss Layer Coating Liquid W)

With the exceptions of replacing the 89 parts of the cationic pigment dispersion 1 with 36 parts of the cationic pigment dispersion 4, and altering the quantity of water from 901 parts to 955 parts, the same method as that used in the preparation of the gloss layer coating liquid P in the comparative example 4 was used to prepare a gloss layer coating liquid W.

### [Evaluation Methods]

The ink jet recording materials of each of the above examples and comparative examples were evaluated for releasability, 20° surface gloss, 75° surface gloss, ink absorption, print density, and pigment ink abrasion resistance. The results are shown in Table 1. Each of the evaluations was conducted in accordance with the methods described below.

### (Releasability)

The releasability of the material from the mirror-surface roll during formation of the gloss layer was determined by subjective evaluation.
A: Continuous operation was possible with no problems.
B: Soiling of the mirror-surface roll occurred frequently during operation, which would cause practical problems.
C: Soiling of the mirror-surface roll occurred very frequently during operation, which would cause practical problems.

### (20° Surface Gloss)

The 20° surface gloss of the ink jet recording material was measured using the method described in JIS Z 8741.

### (75° Surface Gloss)

The 75° surface gloss of the ink jet recording material was measured using the method described in JIS P 8142.

### (Ink Absorption)

The ink absorption properties were determined by subjective evaluation, by printing a solid green image onto the ink jet recording material using a dye ink jet printer Pixus iP4100 (manufactured by Canon Inc.), and then visually evaluating the ink absorption within the solid printed area.
A: Favorable result, with no visible unevenness in solid printed area
B: A little unevenness visible in solid printed area, but of no practical concern
C: Some unevenness visible in solid printed area, which may be problematic depending on intended use.

### (Print Density)

Solid black images were printed onto separate samples of the ink jet recording material using a dye ink jet printer PM-G820 (manufactured by Seiko Epson Corporation) and a dye ink jet printer Pixus iP8600 (manufactured by Canon Inc.) respectively, and after standing for 24 hours, each of the solid printed areas was measured for print density using a GretagMacbeth reflection densitometer (RD-19I, manufactured by GretagMacbeth AG), and the average print density across 5 separate measurements was calculated.

### (Pigment Ink Abrasion Resistance)

The pigment ink abrasion resistance was determined by subjective evaluation, by printing a solid black image onto the ink jet recording material using a pigment ink jet printer PX-G920 (manufactured by Seiko Epson Corporation), and then immediately following printing, scratching the surface of the solid printed area five times with a finger.
A: Favorable result, with no removal of ink from the solid printed area
B: Almost no ink was removed from the solid printed area, and of no practical concern
C: Ink was readily removed from the solid printed area, which would cause practical problems

**[Table 1]**

| | Releasability | 20° surface gloss | 75° surface gloss | Ink absorption | Print density | | Pigment ink abrasion resistance |
|---|---|---|---|---|---|---|---|
| | | | | | PM-G820 Solid black printed area | Pixus iP8600 Solid black printed area | |
| Example 1 | A | 38 | 79 | B | 2.31 | 2.43 | A |
| Example 2 | A | 41 | 81 | B | 2.31 | 2.4 | A |
| Example 3 | A | 39 | 81 | B | 2.32 | 2.42 | B |
| Example 4 | A | 29 | 74 | A | 2.26 | 2.36 | B |
| Example 5 | A | 33 | 78 | A | 2.27 | 2.35 | A |
| Example 6 | A | 38 | 80 | A | 2.25 | 2.37 | A |
| Example 7 | A | 51 | 84 | B | 2.25 | 2.33 | A |
| Example 8 | A | 15 | 59 | A | 2.28 | 2.38 | A |
| Example 9 | A | 27 | 68 | A | 2.19 | 2.27 | A |
| Example 10 | A | 22 | 68 | A | 2.26 | 2.32 | A |
| Example 11 | A | 35 | 76 | B | 2.27 | 2.38 | A |
| Example 12 | A | 35 | 79 | A | 2.27 | 2.38 | A |
| Example 13 | A | 38 | 80 | A | 2.27 | 2.38 | A |
| Example 14 | A | 37 | 80 | A | 2.26 | 2.37 | A |
| Example 15 | A | 39 | 82 | A | 2.32 | 2.41 | A |
| Example 16 | A | 39 | 81 | A | 2.29 | 2.39 | A |
| Example 17 | A | 38 | 80 | A | 2.31 | 2.40 | A |
| Example 18 | A | 37 | 79 | A | 2.27 | 2.38 | A |
| Comparative example 1 | A | 37 | 79 | A | 2.31 | 2.38 | C |
| Comparative example 2 | A | 36 | 81 | A | 2.29 | 2.38 | C |
| Comparative example 3 | A | 35 | 78 | A | 2.3 | 2.37 | C |
| Comparative example 4 | C | 26 | 70 | B | 2.27 | 2.36 | A |
| Comparative example 5 | B | 27 | 71 | B | 2.28 | 2.35 | A |
| Comparative example 6 | C | 26 | 71 | A | 2.29 | 2.36 | A |
| Comparative example 7 | B | 17 | 64 | A | 2.25 | 2.36 | A |
| Comparative examples 8 | C | 18 | 64 | A | 2.26 | 2.35 | A |
| Comparative example 9 | C | 24 | 69 | A | 2.27 | 2.36 | A |
| Comparative example 10 | C | 13 | 58 | A | 2.29 | 2.41 | A |
| Comparative example 11 | C | 15 | 61 | A | 2.26 | 2.38 | A |

As is evident from Table 1, the ink jet recording materials of the examples all exhibit excellent releasability from the mirror-surface roll during gloss layer formation, as well as offering favorable pigment ink abrasion resistance and favorable print densities.

In contrast, the comparative examples 1 through 3, which used an anionic pigment in the gloss layer, suffered from problems of poor pigment ink abrasion resistance. Furthermore, in the comparative examples 4 through 11, which used a cationic pigment in the gloss layer, because only cationic release agents could be used, problems arose in terms of the releasability from the mirror-surface roll during gloss layer formation.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as limited by the foregoing description but is only limited by the scope of the appended claims.

## Claims

1. Composite fine particles, comprising cationic fine particles that exhibit a positive zeta potential when dispersed within water to form a dispersion and an anionic compound that is supported on a surface of said cationic fine particles, wherein said composite fine particles exhibit a negative zeta potential when dispersed within water to form a dispersion.

2. Composite fine particles according to claim 1, wherein said anionic compound is a carboxylic acid-based compound.

3. Composite fine particles according to claim 1, wherein said cationic fine particles are a cationic silica in which a cationic compound is supported on a surface of fine particles of silica.

4. A dispersion produced by dispersing composite fine particles according to claim 1 in a water-based dispersion medium.

5. A dispersion according to claim 4, wherein a zeta potential of said composite fine particles is within a range from -10 to -150 mV.

6. A method of producing a dispersion according to claim 4, comprising:
an aggregation step of mixing cationic fine particles and an anionic compound together within a water-based dispersion medium to form an aggregate, and
a pulverization step of pulverizing said aggregate within said dispersion medium using a mechanical device.

7. An ink jet recording material, which comprises a coating layer comprising composite fine particles according to claim 1.

8. An ink jet recording material according to claim 7, wherein said coating layer comprising said composite fine particles is formed using a coating liquid comprising a dispersion produced by dispersing said composite fine particles in water.

9. An ink jet recording material according to claim 7, wherein said coating layer comprising said composite fine particles is provided as an outermost surface layer.

10. An ink jet recording material according to claim 9, wherein said coating layer comprising said composite fine particles also comprises an anionic release agent.

11. An ink jet recording material according to claim 7, wherein said coating layer comprising said composite fine particles is provided on top of an ink receiving layer of a substrate that is produced by providing said ink receiving layer on top of an air-impermeable or low air permeability support.

12. A method of producing an ink jet recording material, comprising the steps of:
supplying a coating liquid comprising said composite fine particles according to claim 1 and an anionic release agent onto an ink receiving layer of a substrate that is produced by providing said ink receiving layer on top of a support,
forming a gloss layer by press coating, by passing said substrate between a gloss roll and a press roll so that said coating liquid contacts said gloss roll, and
separating said gloss layer from said gloss roll while said gloss layer is either still wet or in a semi-dried state.
